# EUROPÄISCHE PATENTSCHRIFT

(11) **EP 2 880 476 B1**
(45) Veröffentlichungstag und Bekanntmachung des Hinweises auf die Patenterteilung: **16.01.2019**
(21) Anmeldenummer: 13742204.4
(22) Anmeldetag: 24.07.2013
(51) Int. Cl.: G02B 6/00, F21V 8/00, F21S 41/20

(54) **LICHTLEITELEMENT UND LICHTMODUL**
LIGHT GUIDING ELEMENT AND LIGHT MODULE
ÉLÉMENT DE GUIDAGE DE LUMIÈRE ET MODULE LUMINEUX

(30) Priorität: 03.08.2012 DE 102012213845
(43) Veröffentlichungstag der Anmeldung: 10.06.2015
(73) Patentinhaber: Automotive Lighting Reutlingen GmbH, 72762 Reutlingen (DE)
(72) Erfinder: STEFANOV, Emil P., 72762 Reutlingen (DE); BUCHBERGER, Christian, 72770 Reutlingen (DE)
(74) Vertreter: DREISS Patentanwälte PartG mbB
(86) Internationale Anmeldenummer: PCT/EP2013/065611
(87) Internationale Veröffentlichungsnummer: WO 2014/019912

(56) Entgegenhaltungen:
- EP-A1- 1 903 274
- WO-A2-2004/088200
- DE-A1-102010 046 021
- DE-B3-102009 053 581

## Beschreibung

Die Erfindung betrifft ein Lichtleitelement für Kfz-Beleuchtungseinrichtungen nach dem Oberbegriff des Anspruchs 1, sowie ein Lichtmodul gemäß dem Oberbegriff des Anspruchs 9.

Bevorzugtes Anwendungsgebiet sind Kfz-Scheinwerfer, welche eine matrixartige Anordnung von Halbleiterlichtquellen, eine Primäroptik und eine Sekundäroptik aufweisen. Dabei weist die Primäroptik matrixartig angeordnete, den Lichtquellen jeweils zugeordnete Lichtleitelemente auf, welche jeweils eine Lichteintrittsfläche und eine Lichtaustrittsfläche aufweisen. Die Lichtaustrittsflächen der Lichtleitelemente sind matrixartig angeordnet und bilden so eine Primäroptikaustrittsfläche. Die Sekundäroptik ist dazu eingerichtet, die sich auf dieser Primäroptikaustrittsfläche einstellende Intensitätsverteilung des Lichts zur Erzielung einer gewünschten Abstrahllichtverteilung auf ein vor dem Scheinwerfer liegendes Vorfeld abzubilden.

Diese Anordnungen ermöglichen es, eine Vielzahl von Halbleiterlichtquellen zur Lichterzeugung zu verwenden. Dadurch lassen sich hohe Intensitäten erzielen. Außerdem kann eine dynamische Abstrahllichtverteilung realisiert werden. Hierzu ist es bekannt, gezielt nur einzelne der Halbleiterlichtquellen bei Betrieb der übrigen Lichtquelle auszuschalten. Dadurch kann z.B. ein Teilfernlicht oder ein Streifenfernlicht erzeugt werden, welches eine Lichtverteilung aufweist, mit der ein unerwünschtes Blenden des Gegenverkehrs vermieden werden kann. Es werden gezielt diejenigen Halbleiterlichtquellen ausgeschaltet, deren Licht über die Primäroptik und die Sekundäroptik in einen den Gegenverkehr blendenden Bereich abgelenkt werden würde. Im Kfz-Bereich soll die Abstrahllichtverteilung einen bestimmten, gesetzlich vorgegebenen Intensitätsverlauf aufweisen. Eine Abblendlichtverteilung z.B. weist eine im Wesentlichen horizontal verlaufende Hell-Dunkel-Grenze auf. Diese kann z.B. auf der dem Gegenverkehr abgewandten Seite höher liegen, als auf der dem Gegenverkehr zugewandten Seite (sog. "z-shape"). Dadurch wird eine Blendung des Gegenverkehrs vermieden, und gleichzeitig die dem Gegenverkehr abgewandte Seite mit einer vergleichsweise großen Reichweite ausgeleuchtet. Demgegenüber soll eine Fernlichtverteilung in der Regel einen intensiv ausgeleuchteten Bereich oberhalb der Hell-Dunkel-Grenze aufweisen.

Um den Aufbau eines Kfz-Scheinwerfers kompakt und einfach zu halten, ist es daher erwünscht, bereits mit der Primäroptik des Scheinwerfers eine gewünschte Lichtverteilung zu erzeugen.

In der WO 2004/088200 A2 und in der EP 1 903 274 A1 sind Lichtleiter mit den Merkmalen des Oberbegriffs des Anspruchs 1 beschrieben.

In der DE 10 2009 053 581 B3 ist eine Primäroptik mit einer Vielzahl matrixartig angeordneter Lichtleitelemente beschrieben. Die Lichtleitelemente weisen jeweils eine im Wesentlichen quadratische Lichteintrittsfläche und eine im Wesentlichen rechteckige Lichtaustrittsfläche auf. Zwischen Lichteintrittsfläche und Lichtaustrittsfläche erstreckt sich ein Lichtleitabschnitt mit zur Lichtleitung unter interner Totalreflexion ausgebildeten Seitenflächen. Im Verlauf von der Lichteintrittsfläche zur Lichtaustrittsfläche weiten sich die Seitenflächen trichterförmig oder konisch auf. Durch geeignete konkave Krümmung der Seitenwände des Lichtleitabschnitts kann auf der Lichtaustrittsfläche in gewissem Maße ein Intensitätsverlauf des geleiteten Lichts vorgegeben werden, da Lichtstrahlen durch Totalreflexion an der gewölbten Seitenfläche eine Richtungskomponente entgegengesetzt der Wölbungsrichtung der Seitenfläche erhalten.

Problematisch ist dabei, dass bei gegebener Ausdehnung des Lichtleitelementes in Richtung von der Lichteintrittsfläche zur Lichtaustrittsfläche die Lichtaustrittsfläche nur begrenzt vergrößert werden kann. Aufgrund der Aufweitung des Querschnitts des Lichtleitabschnitts von der Lichteintrittsfläche zu der Lichtaustrittsfläche nimmt bei Vergrößerung der Lichtaustrittsfläche derjenige Lichtanteil zu, der an keiner der begrenzenden Seitenwände des Lichtleitabschnitts total reflektiert wird. Auf der Lichtaustrittsfläche führen diese direkt von der Lichteintrittsfläche zur Lichtaustrittsfläche gestrahlten Lichtstrahlen zu einem kastenförmigen Intensitätsprofil oder zu einer Stufe im Intensitätsprofil des Lichts. Um diesen Effekt zu vermeiden, müsste bei

Vergrößerung der Lichtaustrittsfläche auch die Ausdehnung des Lichtleitabschnitts zwischen der Lichteintrittsfläche und der Lichtaustrittsfläche vergrößert werden, um den Anteil der an Seitenflächen reflektierten Strahlen zu erhöhen.

Der vorliegenden Erfindung liegt die Aufgabe zugrunde, bei Kfz-Scheinwerfern mit einer Primäroptik eine stetig modulierte Lichtverteilung vorzugeben und einen kompakten Aufbau zu ermöglichen.

Diese Aufgabe wird durch ein Lichtleitelement gemäß Anspruch 1, sowie durch ein Lichtmodul gemäß Anspruch 9 gelöst.

Das Lichtleitelement mit den Merkmalen des Oberbegriffs des Anspruchs 1 zeichnet sich erfindungsgemäß dadurch aus, dass sich die Lichteintrittsfläche von der Lichtaustrittsfläche in ihrer Form unterscheidet, wobei der Lichtleitabschnitt unmittelbar ausgehend von der Lichteintrittsfläche einen sich in Richtung zur Lichtaustrittsfläche erstreckenden Dachabschnitt aufweist. Im Bereich des Dachabschnitts laufen die erste Seitenfläche und die zweite Seitenfläche in Bezug auf die Austrittsflächenlängsrichtung aufeinander zu (hierbei bezeichnet gemäß dem Oberbegriff des Anspruchs 1 die Austrittsflächenlängsrichtung diejenige Richtung, entlang der sich die Lichtaustrittsfläche länglich erstreckt).

Der Lichtleitabschnitt erstreckt sich zwischen der Lichteintrittsfläche und der Lichtaustrittsfläche im Wesentlichen in eine Hauptlichtleitrichtung, in welche Licht unter interner Totalreflexion an den Seitenflächen des Lichtleitabschnitts geleitet werden kann. Interne Totalreflexion tritt auf, wenn ein auf eine Seitenfläche auftreffender Lichtstrahl zum Lot auf die Seitenfläche im Reflexionspunkt einen Winkel bildet, welcher den Grenzwinkel der Totalreflexion überschreitet, so dass das Brechungsgesetz (Snellius-Gesetz) keine reelle Lösung für den Brechungswinkel liefert.

Die erste und die zweite Seitenfläche bilden schräg zueinander orientierte Lichtleitflächen. Sie erstrecken sich ebenfalls im Wesentlichen entlang der Hauptlichtleitrichtung zwischen der Lichteintrittsfläche und der Lichtaustrittsfläche. Bezüglich dieser Richtung verlaufen die erste und die zweite Seitenfläche im Wesentlichen parallel. Sie können auch in diese Richtung auseinanderlaufen. Demgegenüber sind die erste und die zweite Seitenfläche schräg zur Austrittsflächenlängsrichtung geneigt, das heißt dachartig zueinander orientiert. Die erste und die zweite Seitenfläche sind vorzugsweise zumindest abschnittsweise eben ausgebildet. Die Ebenen erstrecken sich dann in Richtung von der Lichteintrittsfläche zur Lichtaustrittsfläche und laufen bezüglich der Austrittsflächenlängsrichtung (also im Wesentlichen senkrecht zur Hauptlichtleitrichtung) dachartig zusammen.

Die Lichteintrittsfläche und die Lichtaustrittsfläche sind formunähnlich insofern, als sie nicht durch Stauchung, Streckung, Drehung, Verzerrung, Scherung oder ähnliche Abbildungen auseinander hervorgehen. Die unterschiedliche Form ermöglicht, dass der Lichtleitabschnitt in seinem Verlauf von der Lichteintrittsfläche zu der Lichtaustrittsfläche den Dachabschnitt bildet. Dazu weist die Lichteintrittsfläche im allgemeinen Sinne bspw. eine erste Spitzenkante und eine zweite Spitzenkante auf, welche unter einem spitzen Winkel aufeinander zulaufen. Von diesen beiden Spitzenkanten aus erstrecken sich die erste bzw. die zweite Seitenfläche des Dachabschnitts, so dass die erste und die zweite Seitenfläche den genannten dachartigen Verlauf aufweisen. Der Querschnitt des Lichtleitabschnitts geht von der Lichteintrittsfläche insbesondere stetig in die formunähnliche Lichtaustrittsfläche über.

Der von der ersten und der zweiten Seitenfläche gebildete dachartige Rücken, welcher sich von der Lichteintrittsfläche in Richtung Lichtaustrittsfläche erstreckt, erlaubt eine vorteilhafte Beeinflussung des sich auf der Lichtaustrittsfläche einstellenden Intensitätsprofils, wenn in die Lichteintrittsfläche Licht eingekoppelt wird. Bei Reflexion an den Seitenflächen des Dachabschnitts erhalten die im Innern des Lichtleitabschnitts geleiteten Lichtstrahlen eine Richtungskomponente, welche derjenigen Richtung entgegengesetzt ist, in welche die erste und die zweite Seitenfläche aufeinander zu laufen. Daher wird ein Lichtbündel, das sich im Wesentlichen entlang des von der ersten und der zweiten Seitenfläche gebildeten dachartigen Rückens im Lichtleitabschnitt fortpflanzt, bei jeder Totalreflexion am Dachabschnitt in Richtung entgegengesetzt zum Dachabschnitt konzentriert. Insgesamt wird daher das durch die Lichteintrittseinfläche eingekoppelte Licht in einem Konzentrationsbereich der Lichtaustrittsfläche konzentriert, welcher der Richtung entgegengesetzt liegt, in welcher die Seitenflächen des Dachabschnitts aufeinander zu laufen. Dies definiert auf der Lichtaustrittsfläche eine Konzentrationsrichtung.

Da die dachartig ausgerichteten Seitenflächen den Strahlenverlauf von der Lichteintrittsfläche zur Lichtaustrittsfläche nicht vollständig abschatten, gelangt stets ein gewisser Anteil des Lichts in den Bereich der Lichtaustrittsfläche, welcher dem Konzentrationsbereich gegenüberliegt (das heißt den Bereich, welcher in der Richtung liegt, in welche die dachartig angestellten Seitenflächen zusammenlaufen). Wesentlich für die Erfindung ist daher, dass die Seitenflächen des Lichtleitabschnitts derart ausgebildet sind, dass auf der Lichtaustrittsfläche ein gewünschtes Intensitätsprofil erzeugt werden kann, insbesondere eine Variation der Lichtintensität auf der Lichtaustrittsfläche entlang der Austrittsflächenlängsrichtung. In der Richtung, in welcher die Seitenflächen des Dachabschnitts aufeinander zu laufen, nimmt die Lichtintensität stetig ab, z.B. ähnlich einem exponentiellen Verlauf. In der entgegengesetzten Richtung wird ein Intensitätsmaximum im Konzentrationsbereich der Lichtaustrittsfläche ausgebildet. Das Intensitätsprofil auf der Lichtaustrittsfläche kann durch die Ausgestaltung der Seitenflächen des Dachabschnitts gezielt beeinflusst werden.

Bei dem erfindungsgemäßen Lichtleitelement ist es möglich, die Lichtaustrittsfläche länglich mit großer Ausdehnung entlang der Austrittsflächenlängsrichtung zu gestalten und dabei über die gesamte Lichtaustrittsfläche ein stetig verlaufendes Intensitätsprofil zu erzeugen. Anders als bei dem genannten Stand der Technik ist es dabei nicht erforderlich, die Längsausdehnung des Lichtleitabschnitts zwischen der Lichteintrittsfläche und der Lichtaustrittsfläche ebenfalls zu vergrößern. Auch bei vergleichsweise geringer Längsausdehnung können die dachartig ausgerichteten Seitenflächen des Dachabschnittes auch mittenah im Lichtleitabschnitt verlaufende Strahlen beeinflussen. Das angesprochene Problem eines stufenartigen oder kastenförmigen Intensitätsverlaufs kann daher vermieden werden.

Zur Verbesserung der Lichtabstrahleigenschaften des Lichtleitelements kann der Lichtaustrittsfläche eine Austrittsoptik zugeordnet sein. Diese Austrittsoptik ist der Lichtaustrittsfläche im Strahlengang nachgelagert, d.h. in Hauptlichtleitrichtung auf die Lichtaustrittsfläche folgend angeordnet. Dabei kann zwischen Lichtaustrittsfläche und Austrittsoptik ein vorgegebener Abstand entlang der Hauptlichtleitrichtung vorgesehen sein. Die Austrittsoptik weist eine insbesondere konvex gekrümmte, z.B. linsenartige oder kissenartige Austrittsoptikfläche auf, durch welche Licht in Richtung einer Sekundäroptik abgestrahlt werden kann. Insofern bildet dann die Austrittsoptikfläche diejenige Fläche, durch die Licht aus dem gesamten Lichtleitelement austreten kann. Die Lichtaustrittsfläche ist dann diejenige Fläche, durch die das in dem Lichtleitabschnitt geleitete Licht aus dem Lichtleitabschnitt austritt.

Durch die Austrittsoptiken und ihre Anordnung relativ zu den Lichtaustrittsflächen können in dem Lichtleitabschnitt geleitete Lichtstrahlen nach ihrem Austritt durch die Lichtaustrittsfläche in Richtung der Sekundäroptik zusätzlich gebündelt werden. Außerdem können Nebenlichtlichtstrahlen, welche bei ihrem Austritt aus der Lichtaustrittsfläche einen zu großen Winkel zur Hauptlichtleitrichtung aufweisen, an der Sekundäroptik vorbei gelenkt werden. Dadurch kann vermieden werden, dass die genannten Nebenlichtstrahlen von der Sekundäroptik unter einem großen Winkel zur Hauptabstrahlrichtung projiziert werden und so bei einem Teilfernlicht zur ungewollten, diffusen Ausleuchtung der ausgeblendeten Bereiche führen können.

Vorzugsweise verlaufen die begrenzenden Seitenflächen des Lichtleitabschnitts, insbesondere auch die Seitenflächen des Dachabschnitts, in Erstreckungsrichtung des Lichtleitabschnitts ausgehend von der Lichteintrittsfläche zur Lichtaustrittsfläche auseinander, so dass sich der Querschnitt des Lichtleitabschnitts in Richtung ausgehend von der Lichteintrittsfläche zur Lichtaustrittsfläche vergrößert. Insbesondere laufen die Seitenflächen konusartig oder trichterartig auseinander. Hierbei ist z.B. die Lichteintrittsfläche kleiner als die Lichtaustrittsfläche ausgebildet. Die auseinanderlaufenden Seitenflächen führen dazu, dass der Reflexionswinkel an den Seitenflächen in Bezug auf die Hauptlichtleitrichtung bei jeder Totalreflexion geringer wird. Somit kann ein in die Lichteintrittsfläche eingekoppeltes divergentes Lichtbündel bezüglich der Hauptlichtleitrichtung kollimiert werden.

Wenn die Seitenflächen des Dachabschnitts zusätzlich auch in Richtung ausgehend von der Lichteintrittsfläche zur Lichtaustrittsfläche auseinanderlaufen, so trifft bei Leitung eines Lichtbündels von der Lichteintrittsfläche zur Lichtaustrittsfläche ein abnehmender Anteil der Lichtstrahlen auf eine der dachartigen Seitenflächen. Somit kann durch eine Aufweitung der Seitenflächen des Dachabschnitts in lateraler Richtung (senkrecht zur Austrittsflächenlängsrichtung) das Intensitätsprofil auf der Lichtaustrittsfläche zusätzlich beeinflusst werden.

Zusätzlich zu den Seitenflächen des Dachabschnitts wird der Lichtleitabschnitt vorzugsweise von wenigstens einer weiteren Lichtleitfläche begrenzt, welche sich in Richtung von der Lichteintrittsfläche zur Lichtaustrittsfläche erstreckt und zumindest abschnittsweise unmittelbar angrenzend entlang einer der Seitenflächen des Dachabschnitts verläuft. Die weitere Lichtleitfläche stellt eine Seitenfläche der eingangs genannten Art dar, das heißt sie ist zur Lichtleitung durch Totalreflexion ausgebildet. Diese Lichtleitfläche verläuft im Wesentlichen parallel zu der Austrittsflächenlängsrichtung, d.h. die weitere Lichtleitfläche ist im Gegensatz zu den Seitenflächen des Dachabschnitts nicht dachartig schräg angestellt. Daher erhält ein Lichtstrahl bei Reflexion an der Lichtleitfläche keine zusätzliche Richtungskomponente entgegengesetzt der Richtung, in welcher die Seitenflächen des Dachabschnitts aufeinander zu laufen. Durch die Wahl des Größenverhältnisses von Lichtleitfläche und Seitenflächen des Dachabschnitts kann das Intensitätsprofil auf der Lichtaustrittsfläche beeinflusst werden. Je größer der Anteil der dachartigen Seitenflächen, desto mehr Licht wird bei Lichtleitung durch den Lichtleitabschnitt in den Konzentrationsbereich auf der Lichtaustrittsfläche gelenkt.

Weist man dem Dachabschnitt eine parallel zur Austrittsflächenlängsrichtung bemessene Dachhöhe zu und der weiteren Lichtleitfläche eine parallel zu der Austrittsflächenlängsrichtung bemessene Lichtleithöhe zu, so bestimmt das Verhältnis von Dachhöhe und Lichtleithöhe, wie stark die Lichtkonzentration im Konzentrationsbereich auf der Lichtaustrittsfläche ausgeprägt ist. Je größer die Dachhöhe im Vergleich zur Lichtleithöhe, desto größer der Anteil des in die Lichteintrittsfläche eingekoppelten Lichts, welcher in den Konzentrationsbereich der Lichtaustrittsfläche gelenkt wird, d.h. desto steiler ausgeprägt ist der Verlauf Intensitätsprofils ausgehend vom Intensitätsmaximum. Der Intensitätsverlauf kann weiter beeinflusst werden, indem das Verhältnis von Dachhöhe zur Lichtleithöhe im Verlauf des Dachabschnitts von der Lichteintrittsfläche zur Lichtaustrittsfläche variiert, z.B. stetig verkleinert wird.

Die weitere Lichtleitfläche stößt beispielsweise über eine Dachgrenzkante an den Dachabschnitt an, wobei die Dachgrenzkante in Richtung ausgehend von der Lichteintrittsfläche zur Lichtaustrittsfläche verläuft. Die erste und die zweite Seitenfläche des Dachabschnitts hingegen laufen z.B. in einer Dachfirstkante zusammen. Diese Dachfirstkante des Dachabschnitts verläuft dann ebenfalls in Richtung von der Lichteintrittsfläche zur Lichtaustrittsfläche.

Der Dachabschnitt kann jedoch auch in der Art eines gekappten Daches ausgebildet sein. Hierzu kann der Lichtleitabschnitt in der Richtung, entlang welcher die Seitenflächen des Dachabschnitts aufeinander zu laufen, von einer Dachgratfläche begrenzt sein. Diese Dachgratfläche verläuft zwischen der ersten und der zweiten Seitenfläche jeweils unmittelbar an diese angrenzend und ist derart ausgebildet, dass der Lichtleitabschnitt in einem Querschnitt parallel zur Lichtaustrittsfläche betrachtet eine senkrecht zur Austrittsflächenlängsrichtung verlaufende Begrenzungskante aufweist, welche von der Dachgratfläche gebildet ist. Die Dachgratfläche kann entlang des Dachabschnitts abschnittsweise senkrecht zur Austrittsflächenlängsrichtung verlaufen. Die Dachgratfläche erstreckt sich ebenfalls in Richtung von der Lichteintrittsfläche zur Lichtaustrittsfläche entlang des Verlaufs des Lichtleitabschnitts. Die aufeinander zu laufenden Seitenflächen des Dachabschnitts stoßen unmittelbar an die Dachgratfläche an, so dass die Dachgratfläche das von den Seitenflächen gebildete Dach kappt. Vorzugsweise grenzt die Dachgratfläche in einer ersten Dachgradkante an die erste Seitenfläche und in einer zweiten Dachgradkante an die zweite Seitenfläche an, wobei die erste und die zweite Dachgradkante im Wesentlichen in Richtung von der Lichteintrittsfläche zur Lichtaustrittsfläche verlaufen und z.B. parallel sind. Denkbar ist auch ein nichtparalleler Verlauf.

Die Dachgratfläche weist eine senkrecht zu ihrer Erstreckungsrichtung von der Lichteintrittsfläche zur Lichtaustrittsfläche bemessene Lateralausdehnung auf, welche im Verlauf der Dachgratfläche von der Lichteintrittsfläche zur Lichtaustrittsfläche vorzugsweise zunimmt. Die Lateralausdehnung bezeichnet die Breite der Dachgratfläche senkrecht zur Erstreckungsrichtung des Lichtleitabschnitts und insbesondere auch senkrecht zur Austrittsflächenlängsrichtung. Die Dachgratfläche weitet sich entlang ihres Verlaufs in Richtung von der Lichteintrittsfläche zur Lichtaustrittsfläche auf. Die insbesondere stetige Zunahme der Lateralausdehnung kann über den gesamten Verlauf der Dachgratfläche von der Lichteintrittsfläche zur Lichtaustrittsfläche oder nur über einen Teilabschnitt des Dachabschnitts erfolgen. Daher weitet sich der Lichtleitabschnitt im Verlauf von der Lichteintrittsfläche zur Lichtaustrittsfläche trichterförmig bezüglich einer lateralen Richtung senkrecht zur Austrittsflächenlängsrichtung auf.

Der Dachabschnitt erstreckt sich nicht notwendigerweise bis unmittelbar zur Lichtaustrittsfläche hin. Denkbar ist vielmehr, dass der Lichtleitabschnitt einen an den Dachabschnitt angrenzenden Auslaufabschnitt aufweist, welcher von Seitenflächen begrenzt ist, die bezüglich der Austrittsflächenlängsrichtung parallel verlaufen. Dieser Auslaufabschnitt ist daher nicht dachartig ausgebildet. Der Übergang zwischen Dachabschnitt und Auslaufabschnitt kann dadurch gebildet werden, dass sich die genannte Dachgratfläche so weit aufweitet, dass ihre Lateralausdehnung der Lateralausdehnung der Lichtaustrittsfläche entspricht und sich hieran der Auslaufabschnitt anschließt.

Zur weiteren Ausgestaltung kann sich die Dachgratfläche in ihrem Verlauf ausgehend von der Lichteintrittsfläche zur Lichtaustrittsfläche in diejenige Richtung krümmen, in welche die erste und die zweite Seitenfläche zusammenlaufen. Insbesondere wölbt sich die Dachgratfläche in Austrittsflächenlängsrichtung. Dadurch weitet sich der Lichtleitabschnitt im Verlauf von der Lichteintrittsfläche zur Lichtaustrittsfläche trichterartig auf, wobei diese Aufweitung bezüglich der Austrittsflächenlängsrichtung bzw. bezüglich derjenigen Richtung erfolgt, in welcher die Seitenflächen dachartig aufeinander zu laufen. Die den Lichtleitabschnitt begrenzende Dachgratfläche ist z.B. konkav gekrümmt.

Für bestimmte Anwendungen kann der Dachabschnitt bezüglich der Austrittsflächenlängsrichtung verkippt ausgebildet werden. Hierzu ist die erste Seitenfläche des Dachabschnitts in einem spitzen ersten Anstellwinkel und die zweite Seitenfläche in einem zweiten spitzen Anstellwinkel zu der Austrittsflächenlängsrichtung orientiert, wobei sich der erste Anstellwinkel betragsmäßig von dem zweiten Anstellwinkel unterscheidet. Bei Propagation durch diesen Dachabschnitt erhalten Lichtbündel eine effektive Richtungskomponente in Richtung derjenigen Seitenfläche, welche zu der Austrittsflächenlängsrichtung den größeren Winkel aufweist. Dadurch wird der Lichtschwerpunkt auf der Lichtaustrittsfläche quer zur Austrittsflächenlängsrichtung verschoben. Dieser Effekt kann vorteilhaft sein, um bei Konstruktion einer komplexen Scheinwerferanordnung eine Verschiebung der Bauteile gegeneinander zu kompensieren. Außerdem kann eine Lichtverteilung mit lateral verschobenem Lichtschwerpunkt, z.B. zur Erzeugung einer abgeblendeten Lichtverteilung bereitgestellt werden.

Vorteilhaft kann es auch sein, wenn sich der Lichtleitabschnitt in seinem Verlauf von der Lichteintrittsfläche zur Lichtaustrittsfläche entlang einer gekrümmten oder gebogenen Leitlinie erstreckt, wobei der Dachabschnitt und/oder wenigstens eine der Seitenflächen des Lichtleitabschnitts dem Verlauf der Leitlinie folgt. Dadurch kann gezielt der Intensitätsverlauf auf der Lichtaustrittsfläche modifiziert werden. So ist es möglich, eine auf der Lichtaustrittsfläche verkippt verlaufende Hell-Dunkel-Grenze beziehungsweise ein verkippt verlaufendes Intensitätsmaximum zu erzeugen.

Zur Begrenzung des Lichtleitabschnitts auf der dem Dachabschnitt gegenüberliegenden Seite in Bezug auf die Hauptlichtleitrichtung von der Lichteintrittsfläche zur Lichtaustrittsfläche kann eine Dachgegenebene vorgesehen sein. Diese Dachgegenebene erstreckt sich zwischen der Lichteintrittsfläche und der Lichtaustrittsfläche und ist im Wesentlichen als Ebene ausgebildet. In Richtung auf die Dachgegenebene laufen die Seitenflächen des Dachabschnittes auseinander. Die Dachgegenebene bildet ebenfalls eine Seitenfläche gemäß dem Oberbegriff des Anspruchs 1, d.h. sie ist zur Lichtleitung unter Totalreflexion ausgebildet. Bei Fortpflanzung durch den Lichtleitabschnitt erhalten Lichtstrahlen bei Totalreflexion an den Seitenflächen des Dachabschnitts demnach eine Richtungskomponente in Richtung zu der Dachgegenebene. Daher stellt sich auf der Lichtaustrittsfläche eine Lichtkonzentration in dem Bereich ein, in welchem die Dachgegenebene mit der Lichtaustrittsfläche zusammenläuft. Der Konzentrationsbereich der Lichtaustrittsfläche schließt sich insbesondere unmittelbar an diejenige Kante der Lichtaustrittsfläche an, in dem die Dachgegenebene mit der Lichtaustrittsfläche zusammenläuft.

Anstelle einer Dachgegenebene kann der Lichtleitabschnitt jedoch zusätzlich zu dem oben genannten (ersten) Dachabschnitt einen weiteren Dachabschnitt aufweisen (im Folgenden Gegendachabschnitt genannt). Dieser Gegendachabschnitt begrenzt den Lichtleitabschnitt in der zum Dachabschnitt entgegengesetzten Richtung bezüglich der Erstreckungsrichtung zwischen Lichteintrittsfläche und Lichtaustrittsfläche. Der Lichtleitabschnitt weist dann einen Dachabschnitt und einen Gegendachabschnitt auf, welche sich jeweils in Richtung von der Lichteintrittsfläche zu der Lichtaustrittsfläche erstrecken und einander in Bezug auf den Verlauf des Lichtleitabschnitts von der Lichteintrittsfläche zur Lichtaustrittsfläche gegenüberliegen. Auch der Gegendachabschnitt weist zwei Seitenflächen (zum Beispiel dritte und vierte Seitenfläche) auf, welche in Bezug auf die Austrittsflächenlängsrichtung aufeinander zu laufen, jedoch in die entgegengesetzte Richtung zu derjenigen, in welche die erste und die zweite Seitenfläche des erstgenannten Dachabschnitts aufeinander zu laufen.

Ein Dachabschnitt kann vorzugsweise dadurch erzielt werden, dass die Lichteintrittsfläche und die Lichtaustrittsfläche jeweils als ein Polygon ausgebildet sind, wobei die Zahl der Ecken der Lichteintrittsfläche von der Zahl der Ecken der Lichtaustrittsfläche abweichen. Denkbar ist eine geringere Zahl von Ecken der Lichteintrittsfläche, z.B. eine dreieckige Lichteintrittsfläche, welche über den Lichtleitabschnitt mit einer rechteckigen Lichtaustrittsfläche verbunden ist. Andererseits kann die Lichteintrittsfläche eine größere Zahl von Ecken aufweisen, als die Lichtaustrittsfläche (z.B. eine sechseckig ausgebildete Lichteintrittsfläche, welche über den Lichtleitabschnitt in eine rechteckige Lichtaustrittsfläche übergeht). Selbstverständlich können Lichteintrittsfläche und Lichtaustrittsfläche auch eine übereinstimmende Eckenzahl aufweisen (z.B. kann die Lichteintrittsfläche als Viereck ausgebildet sein, welches eine Ecke mit einem spitzen Kantenwinkel aufweist, wogegen die Lichtaustrittsfläche rechteckig ist).

Wesentlicher Gesichtspunkt der Erfindung ist es, dass die Lichtaustrittsfläche länglich ausgebildet sein kann. Insofern weist die Lichtaustrittsfläche eine Längsausdehnung in Austrittsflächenlängsrichtung und eine Querausdehnung senkrecht zur Austrittsflächenlängsrichtung auf, wobei die Längsausdehnung größer ist als die Querausdehnung. Insbesondere kann die Längsausdehnung doppelt so groß oder größer als doppelt so groß wie die Querausdehnung sein. Die Lichtaustrittsfläche kann auch streifenähnlich in die Länge gezogen verlaufen. Besonders bevorzugt ist eine Ausgestaltung der Lichtaustrittsfläche als Rechteck mit zwei entlang der Austrittsflächenlängsrichtung orientierten zueinander parallelen Längsseiten und zwei senkrecht hierzu verlaufenden zueinander parallelen Querseiten, wobei die Längsseiten länger als die Querseiten sind. Insbesondere ist das Seitenverhältnis (Länge der Längsseiten zur Länge der Querseiten) größer als 2:1. Mit dem erfindungsgemäßen Lichtleitelement kann auf einer derartig länglich ausgebildeten Lichtaustrittsfläche ein stetig verlaufendes Intensitätsprofil über die gesamte Längsausdehnung erzeugt werden. Möglich ist beispielsweise eine entlang einer schmalen Querseite der Lichtaustrittsfläche verlaufende Hell-Dunkel-Grenze (Intensitätsmaximum) mit stetigem Auslauf in Richtung der gegenüberliegenden schmalen Querseite in der Richtung, in welche die Seitenflächen des Dachabschnitts zusammenlaufen. Anders als bei den bekannten Lichtleitelementen ist es nicht erforderlich, bei Vergrößerung der Lichtaustrittsfläche in Austrittsflächenlängsrichtung auch die Ausdehnung des Lichtleitelements entlang des Verlaufs von der Lichteintrittsfläche zur Lichtaustrittsfläche zu vergrößern. Das eingangs geschilderte Problem eines kastenförmigen oder stufenartigen Lichtprofils kann vermieden werden.

Die eingangs gestellte Aufgabe wird auch dadurch gelöst, dass bei einem Lichtmodul für Kfz-Scheinwerfer mit den Merkmalen des Oberbegriffs des Anspruchs 9 sämtliche oder einzelne der darin vorgesehenen Lichtleitelemente in der vorherstehend beschriebenen erfindungsgemäßen Art ausgebildet sind. Bei dem Lichtmodul sind die einzelnen, matrixartig angeordneten Halbleiterlichtquellen vorzugsweise unabhängig voneinander zur Lichtabgabe ansteuerbar bzw. an-/ausschaltbar. Dadurch kann eine dynamische Abstrahllichtverteilung erzielt werden, beispielsweise ein Streifenfernlicht der eingangs beschriebenen Art.

Aufgrund der beschriebenen Ausgestaltung der Lichtleitelemente kann auf jeder der zur Primäroptikaustrittsfläche beitragenden Lichtaustrittsfläche eines Lichtleitelements eine Lichtverteilung bereitgestellt werden, welche einen gewünschten Intensitätsverlauf aufweist. Daher kann bereits auf der Primäroptikaustrittsfläche eine Hell-Dunkel-Grenze erzielt werden, welche einen stetigen Intensitätsauslauf entlang der Austrittsflächenlängsrichtung der einzelnen Lichtaustrittsflächen aufweist.

Bei dem Lichtmodul ist jeweils eine Lichteintrittsfläche einer der Halbleiterlichtquellen zugeordnet. Das von der jeweiligen Halbleiterlichtquelle abgestrahlte Licht kann durch die Lichteintrittsfläche in das jeweilige Lichtleitelement eingekoppelt werden. Da die Halbleiterlichtquelle in der Regel divergent ausstrahlt (z.B. für Leuchtdioden der Fall), ist die Einkopplung in die Lichteintrittsfläche umso effektiver, desto näher die jeweilige Halbleiterlichtquelle mit ihrer Lichtabstrahlfläche an der lichtzugeordneten Lichteintrittsfläche angeordnet ist.

Das Lichtmodul kann dadurch verbessert werden, dass die Halbleiterlichtquelle eine Lichtabstrahlfläche zum Abstrahlen von Licht aufweist, wobei diese Lichtabstrahlfläche sich in ihrer Form von der jeweils zugeordneten Lichteintrittsfläche des Lichtleitelements der Primäroptik unterscheidet. Insofern sind die Lichtabstrahlfläche und die Lichteintrittsfläche formunähnlich, das heißt nicht durch Stauchung, Streckung, Drehung, Verzerrung oder Scherung ineinander überführbar. So kann beispielsweise eine quadratische Lichtabstrahlfläche einer LED einer im Wesentlichen dreieckigen Einkoppelfläche zugeordnet sein. Zur Justierung ist es dann nicht erforderlich, sämtliche Ecken der Lichtabstrahlfläche und der Lichteintrittsfläche aufeinander auszurichten. Eine Positionierungsungenauigkeit der Halbleiterlichtquelle relativ zur Lichteintrittsfläche führt dann lediglich dazu, dass die Lichtabstrahlfläche mit einer ihrer Ecken über die Lichteintrittsfläche des Lichtleitelements hinausragt. Damit geht nur ein geringer Teil der abgestrahlten Intensität verloren. Die genannte Formunähnlichkeit verringert also die Genauigkeitsanforderungen, die beim Aufbau des Lichtmoduls an die Justierung der Halbleiterlichtquelle relativ zur Primäroptik zu stellen sind. Dies ermöglicht es, Toleranzabstände zu verringern. Dadurch kann ein kompakteres und effizienteres Lichtmodul aufgebaut werden.

Weitere Einzelheiten und vorteilhafte Ausgestaltungen der Erfindung sind der nachfolgenden Beschreibung zu entnehmen, anhand derer die in den Figuren dargestellten Ausführungsformen der Erfindung näher beschrieben und erläutert sind.

Es zeigen:
Figur 1 ein erfindungsgemäßes Lichtleitelement in einer Ansicht schräg auf die Lichtaustrittsfläche;
Figur 2 das Lichtleitelement gemäß Figur 1 in einer Ansicht schräg auf die Lichteintrittsfläche;
Figur 2a Skizze der Lichteintrittsfläche gemäß Figur 2;
Figur 3 Skizze zur Erläuterung des Strahlenganges im Lichtleitelement gemäß Figur 1 und 2;
Figur 4 eine weitere Ausführungsform eines erfindungsgemäßen Lichtleitelements;
Figur 5 eine wiederum weitere Ausführungsform des Lichtleitelements;
Figur 6 Skizze zur Erläuterung des Strahlengangs;
Figur 7 Lichtintensitätsprofil einer Projektion der sich auf der Lichtaustrittsfläche einstellenden Lichtintensität auf einen Testschirm;
Figur 8 Lichtintensitätsprofil für eine Art erfindungsgemäßes Lichtleitelement;
Figur 9 Lichtintensitätsprofil für eine weitere Art eines erfindungsgemäßen Lichtleitelements;
Figur 10 eine weitere Ausführungsform eines Lichtleitelements;
Figur 10a Skizze der Lichteintrittsfläche gemäß Figur 10;
Figur 11a eine weitere Ausführungsform eines erfindungsgemäßen Lichtleitelements in einer Frontansicht;
Figur 11b das Lichtleielement gemäß Figur 11a in einer Rückansicht;
Figur 12 eine wiederum weitere Ausführungsform eines Lichtleitelements;
Figur 13 eine Primäroptikeinrichtung mit Lichtleitelementen;
Figur 14 Skizze eines erfindungsgemäßen Lichtmoduls;
Figur 15 Intensitätsverlauf der Abstrahllichtverteilung des Lichtmoduls gemäß Figur 14;
Figuren 16 bis 31 Skizzen von Formkombinationen.

In der nachfolgenden Beschreibung werden für übereinstimmende oder entsprechende Merkmale dieselben Bezugszeichen verwendet.

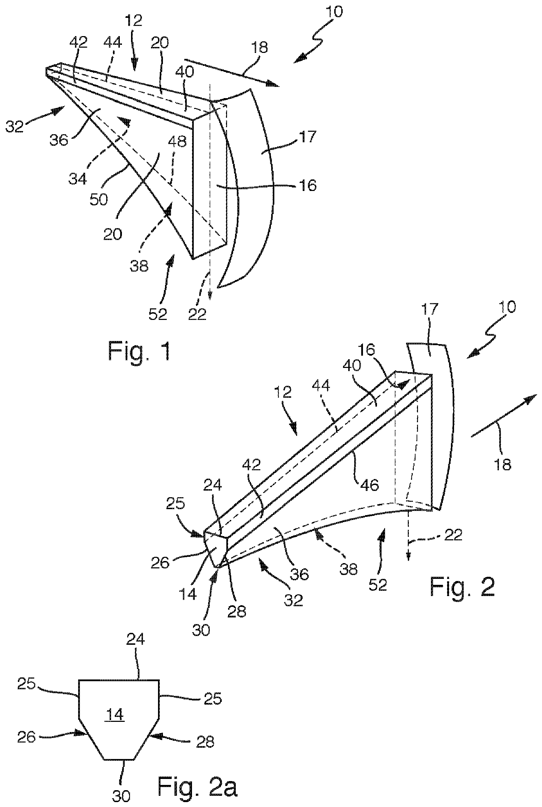

Die Figuren 1 und 2 zeigen Ansichten eines Lichtleitelements 10 mit einem Lichtleitabschnitt 12, welcher sich zwischen einer Lichteintrittsfläche 14 und einer Lichtaustrittsfläche 16 im Wesentlichen entlang einer Hauptlichtleitrichtung 18 erstreckt. Der Lichtleitabschnitt 12 ist aus einem transparenten Kunststoff, beispielsweise Polymethylmethacrylat (PMMA) oder Polycarbonat (PC) oder Silikon, einstückig ausgeformt und weist die genannten Flächen 14 und 16 als begrenzende Flächen auf.

Durch die Lichteintrittsfläche 14 kann Licht in den Lichtleitabschnitt 12 eingekoppelt werden. Der Lichtleitabschnitt 12 ist ferner durch sich zwischen der Lichteintrittsfläche 14 und der Lichtaustrittsfläche 16 erstreckende Seitenflächen 20 begrenzt, so dass das eingekoppelte Licht unter interner Totalreflexion an den Seitenwänden 20 in dem Lichtleitabschnitt 12 von der Lichteintrittsfläche 14 zur Lichtaustrittsfläche 16 geleitet werden kann.

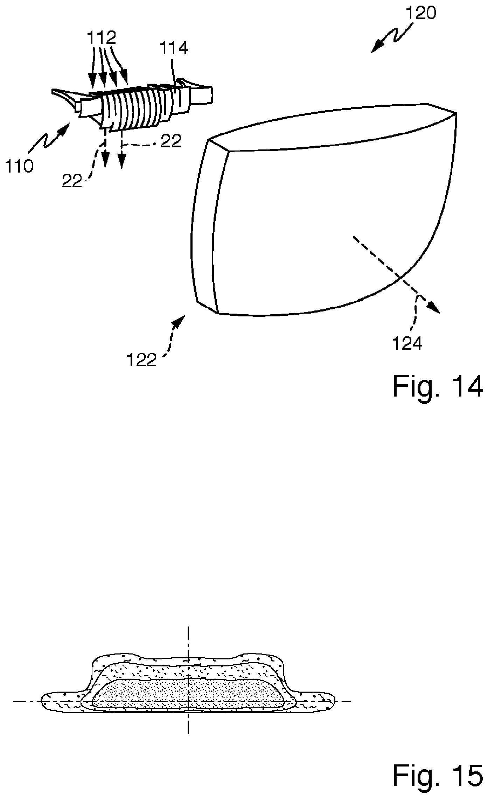

Der Lichtaustrittsfläche 16 ist im Strahlengang nachgelagert eine Austrittsoptikfläche 17 einer skizzierten Austrittsoptik des Lichtleitelements 10 angeordnet. Diese Austrittsoptikfläche 17 ist kissenartig konvex von der Lichtaustrittsfläche 16 weg gewölbt. Dadurch können in dem Lichtleitabschnitt 12 geleitete Lichtstrahlen nach ihrem Austritt durch die Lichtaustrittsfläche 16 in Richtung einer Sekundäroptik (vgl. Figur 14) gebündelt werden und Nebenlichtlichtstrahlen, welche bei ihrem Austritt aus der Lichtaustrittsfläche 16 einen zu großen Winkel zur Hauptlichtleitrichtung 18 aufweisen, an der Sekundäroptik vorbei gelenkt werden. Dies ermöglicht es, eine ungewollte, diffuse Ausleuchtung von dunklen Bereichen der abgestrahlten Lichtverteilung zu vermeiden.

Die Lichtaustrittsfläche 16 weist im Wesentlichen die Form eines Rechtecks auf, dessen lange Längsseiten sich entlang einer Austrittsflächenlängsrichtung 22 erstrecken. Die Abmessung der Lichtaustrittsfläche 16 senkrecht zur Austrittsflächenlängsrichtung 22 ist weniger als halb so groß wie die Abmessung entlang der Austrittsflächenlängsrichtung 22. Insofern ist die Lichtaustrittsfläche 16 in der Art eines rechteckigen Streifens ausgebildet.

Die Lichteintrittsfläche 14 hingegen ist als unregelmäßiges Sechseck ausgebildet. Dieses hat eine sich im Wesentlichen senkrecht zur Austrittsflächenlängsrichtung 22 erstreckende lange Grundkante 24. An diese anschließend weist die Lichteintrittsfläche 14 zwei parallel zur Austrittsflächenlängsrichtung 22 verlaufende Leitkanten 25 auf. An eine der Leitkanten 25 schließt sich eine erste Spitzenkante 26 an. An die andere Leitkante 25 schließt sich entsprechend eine zweite Spitzenkante 28 an. Die erste Spitzenkante 26 und die zweite Spitzenkante 28 stehen derart schräg zueinander, dass sie in Bezug auf die Austrittsflächenlängsrichtung 22 aufeinander zu laufen und so mit der Austrittsflächenlängsrichtung 22 jeweils einen spitzen Anstellwinkel einschließen. Die erste Spitzenkante 26 und die zweite Spitzenkante 28 laufen in dem dargestellten Beispiel jedoch nicht in einer Ecke zusammen, sondern die Lichteintrittsfläche 14 ist auf der der Grundkante 24 gegenüberliegenden Seite von einer senkrecht zur Austrittsflächenlängsrichtung 22 verlaufenden Begrenzungskante 30 begrenzt.

In Figur 2a ist die Lichteintrittsfläche 14 mit ihren Begrenzungskanten zur Verdeutlichung der Form skizziert.

In seinen Verlauf unmittelbar ausgehend von der Lichteintrittsfläche 14 weist der Lichtleitabschnitt 12 einen Dachabschnitt 32 auf. Ausgehend von der ersten Spitzenkante 26 der Lichteintrittsfläche 14 erstreckt sich eine erste Seitenfläche 34 des Lichtleitabschnitts 12 in Richtung der Lichtaustrittsfläche 16. Entsprechend geht von der zweiten Spitzenkante 28 eine zweite Seitenfläche 36 aus. Da die Spitzenkanten 26 und 28 bezüglich der Austrittsflächenlängsrichtung 22 aufeinander zu laufen, verlaufen im Bereich des Dachabschnitts 32 auch die erste und die zweite Seitenfläche 34 und 36 in Bezug auf die Austrittsflächenlängsrichtung 22 aufeinander zu. Sie bilden daher im Bereich des Dachabschnitts 32 einen dachartigen Rücken, welcher sich ausgehend von der Lichteintrittsfläche 14 in Richtung der Lichtaustrittsfläche 16 erstreckt. In den Darstellungen gemäß Figur 1 und 2 weist dieser dachartige Rücken nach vertikal unten. Im vorliegenden Zusammenhang ist daher eine dachartige Ausgestaltung nicht auf die allgemein übliche Ausrichtung (Dachfirst oben) eingeschränkt zu verstehen.

Ausgehend von der unteren Begrenzungskante 30 der Lichteintrittsfläche erstreckt sich eine Dachgratfläche 38 in Richtung zur Lichtaustrittsfläche 16.

Im Bereich des Dachabschnitts 32 verläuft die erste Seitenfläche 34 zumindest abschnittsweise in einer ersten Ebene und die zweite Seitenfläche 36 zumindest abschnittsweise in einer zweiten Ebene. Diese erste und zweite Ebene schneiden sich entlang einer gedachten Schnittlinie, welche in Richtung von der Lichteintrittsfläche 14 zur Lichtaustrittsfläche 16 verläuft.

Auf der dem Dachabschnitt 32 gegenüberliegenden Seite wird der Lichtleitabschnitt 12 von einer Dachgegenebene 40 begrenzt, welche sich ebenenförmig ausgehend von der Grundkante 24 der Lichteintrittsfläche 14 zu einer Querseite der rechteckigen Lichtaustrittsfläche 16 erstreckt. Die Dachgegenebene 40 verläuft im dargestellten Beispiel im Wesentlichen senkrecht zur Austrittsflächenlängsrichtung 22. Denkbar sind jedoch auch Ausgestaltungen, bei welchen die Dachgegenebene einen spitzen Winkel oder einen stumpfen Winkel mit der Austrittsflächenlängsrichtung 22 einschließt.

Ausgehend von den Leitkanten 25 verlaufen jeweils Lichtleitflächen 42, welche im Wesentlichen parallel zur Austrittsflächenlängsrichtung 22 orientiert sind. Die Lichtleitflächen 42 erstrecken sich unmittelbar angrenzend an die erste beziehungsweise zweite Seitenfläche 34. So grenzt eine der Lichtleitflächen 42 über eine Dachgrenzkante 44 an die erste Seitenfläche 34. Entsprechend grenzt die Lichtleitfläche 42 an die zweite Seitenfläche 36 über eine zweite Dachgrenzkante 46.

Die erste Seitenfläche 34 bzw. die zweite Seitenfläche 36 stößt über eine erste Dachgradkante 48 bzw. über eine zweite Dachgradkante 50 mit der Dachgratfläche 38 zusammen.

Ersichtlich gehen die Dachgratkanten 48 und 50 von denjenigen Ecken der Lichteintrittsfläche 14 aus, in welchen die erste beziehungsweise zweite Spitzenkante 26 beziehungsweise 28 mit der Begrenzungskante 30 zusammenstoßen. Die Dachgrenzkanten 44 und 46 gehen von den Ecken aus, in denen die Leitkanten 25 mit den ersten beziehungsweise zweiten Spitzenkanten 26 und 28 zusammenstoßen.

Die erste Seitenfläche 34 und die zweite Seitenfläche 36 laufen in Bezug auf die Erstreckungsrichtung des Lichtleitabschnitts 12 von der Lichteintrittsfläche 14 zur Lichtaustrittsfläche 16 trichterartig auseinander. Außerdem wölbt sich die Dachgratfläche 38 in dem an den Dachabschnitt 32 anschließenden Bereich in die Austrittsflächenlängsrichtung 22, so dass der Lichtleitabschnitt 12 in dem Bereich der Dachgratfläche 38 eine konkave Form aufweist. Insgesamt erweitert sich daher der Querschnitt des Lichtleitabschnitts 12 ausgehend von der Lichteintrittsfläche 14 zur Lichtaustrittsfläche 16 stetig.

Die Dachgratfläche 38 weist eine senkrecht zur Austrittsflächenlängsrichtung 22 bemessene Lateralausdehnung auf. Im Verlauf der Dachgratfläche 38 von der Begrenzungskante 30 zu der unteren Querkante der Lichtaustrittsfläche 16 nimmt die Lateralausdehnung der Dachgratfläche 38 stetig zu. Hierbei ist die Zunahme nicht linear. Die Lateralausdehnung steigt besonders schnell in dem Bereich des Lichtleitabschnitts 12 an, der sich an den Dachabschnitt 32 im Verlauf von der Lichteintrittsfläche 14 zur Lichtaustrittsfläche 16 anschließt. Dies führt dazu, dass der Lichtleitabschnitt 12 in seinem unmittelbar an die Lichtaustrittsfläche 16 anschließenden Abschnitt keine dachartige Ausgestaltung mehr aufweist. Vielmehr hat der Lichtleitabschnitt 12 im Bereich der Lichtaustrittsfläche einen Auslaufabschnitt 52, in welchem die erste Seitenfläche 34 und die zweite Seitenfläche 36 im Wesentlichen parallel zu der Austrittsflächenlängsrichtung 22 verlaufen. Der Auslaufabschnitt 52 schließt sich daher entlang der Richtung von der Lichteintrittsfläche 14 zur Lichtaustrittsfläche 16 an den Dachabschnitt 32 an, wobei der Dachabschnitt 32 stetig in den Auslaufabschnitt 52 übergeht.

Das in den Figuren 1 und 2 dargestellte Lichtleitelement 10 ist spiegelsymmetrisch zu einer Spiegelebene ausgebildet, welche von der Austrittsflächenlängsrichtung 22 und der Hauptlichtleitrichtung 18 ausgespannt wird.

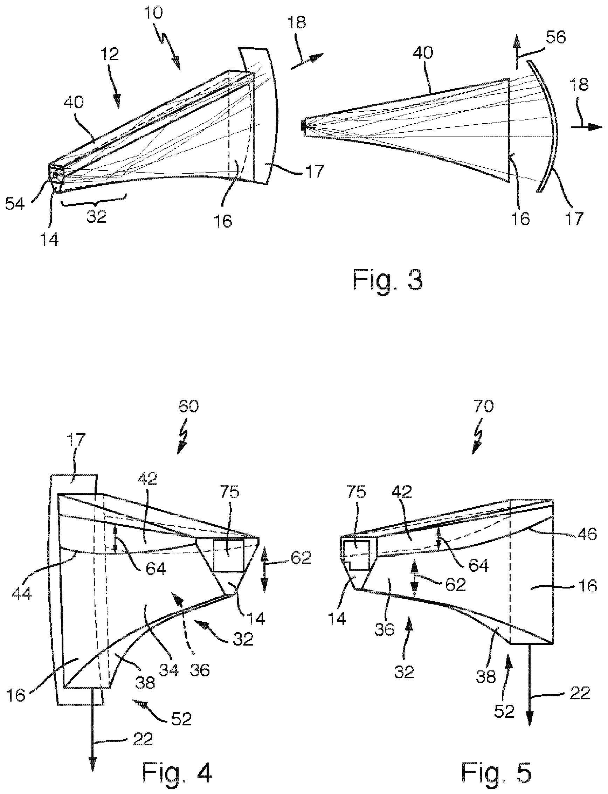

In der Figur 3 ist exemplarisch der Strahlengang einiger von einer angedeuteten Halbleiterlichtquelle 54 ausgehender Lichtstrahlen skizziert. Sämtliche Lichtstrahlen werden im Lichtleitabschnitt 12 im Wesentlichen entlang der Hauptlichtleitrichtung 18 unter interner Totalreflexion geleitet. Bei Reflexion an den dachartigen Seitenflächen 34 und 36 des Dachabschnitts 32 erhalten Lichtstrahlen eine zusätzliche Richtungskomponente in Richtung der Dachgegenebene 40. Dadurch wird ein großer Anteil der im Lichtleitabschnitt 12 geleiteten Lichtstrahlen in Richtung derjenigen Begrenzungskante der Lichtaustrittsfläche 16 gelenkt, in welcher die Dachgegenebene 40 mit der Lichtaustrittsfläche 16 zusammenläuft. Somit bildet sich auf der Lichtaustrittsfläche 16 ein an die genannte Begrenzungskante anschließendes Konzentrationsgebiet für die Lichtintensität. Licht wird auf der Lichtaustrittsfläche 16 in entgegengesetzter Richtung zu derjenigen Richtung konzentriert, in welcher die Seitenflächen 34 und 36 des Dachabschnitts 32 aufeinander zu laufen. Dies definiert eine Konzentrationsrichtung 56 auf der Lichtaustrittsfläche 16, welche im dargestellten Beispiel der Austrittsflächenlängsrichtung 22 entgegengesetzt ist.

Die Figuren 4 und 5 zeigen zwei weitere Ausführungsformen 60 und 70 des erfindungsgemäßen Lichtleitelements, mit welchen sich unterschiedliche Intensitätsverläufe auf der Lichtaustrittsfläche 16 erzielen lassen.

Dem Dachabschnitt 32 lässt sich jeweils eine parallel zu der Austrittsflächenlängsrichtung 22 bemessene Dachhöhe 62 zuordnen, über welche sich die dachartigen Seitenflächen 34 und 36 erstrecken. Für die parallel zur Austrittsflächenlängsrichtung 22 verlaufenden Lichtleitflächen 42 kann eine parallel zu der Austrittsflächenlängsrichtung 22 bemessene Lichtleithöhe 64 definiert werden. Die Dachhöhe 62 und die Lichtleithöhe 64 werden durch den Verlauf der ersten und zweiten Dachgrenzkanten 44 und 46 bestimmt, in welchen die senkrechten Lichtleitflächen 42 mit den dachartigen ersten und zweiten Seitenflächen 34 und 36 zusammenstoßen.

Bei dem Lichtleitelement 60 gemäß Figur 4 verlaufen die Dachgrenzkanten 44 und 46 derart, dass die Lichtleithöhe 64 im Verlauf entlang des Lichtleitabschnitts 12 von der Lichteintrittsfläche 14 zu der Lichtaustrittsfläche 16 im Bereich des Dachabschnitts 32 stetig (insbesondere linear) zunimmt. Es kann sich ein Bereich mit konstanter Lichtleithöhe anschließen. Im Bereich des Dachabschnitts 32 ist die Dachhöhe 62 um ein Vielfaches größer als die Lichtleithöhe 64.

Demgegenüber verlaufen die Dachgrenzkanten 44 und 46 bei dem in der Figur 5 dargestellten Lichtleitelement 70 derart, dass die Lichtleithöhe 64 im Bereich des Dachabschnitts 32 entlang des Verlaufs von der Lichteintrittsfläche 14 zur Lichtaustrittsfläche 16 im Wesentlichen konstant ist, jedoch im weiteren Verlauf entlang des Auslaufabschnitts 52 stetig abnimmt. Im Bereich des Dachabschnitts 32 beträgt die Dachhöhe 62 etwa die doppelte Lichtleithöhe 64. Das Größenverhältnis der dachartigen Seitenflächen 34, 36 zu den Lichtleitflächen 42 bestimmt, wie groß der Anteil des von dem Dachabschnitt 32 weg gelenkten Lichts ist, worauf weiter unten noch näher eingegangen wird.

In den Figuren 4 und 5 ist im Bereich der Lichteintrittsfläche 14 jeweils der Umriss einer Lichtabstrahlfläche 75 einer Halbleiterlichtquelle, beispielsweise eines LED-Chips, angedeutet. Im Falle der Figur 4 weist die Lichtabstrahlfläche 75 eine quadratische Form auf. Die Lichteintrittsfläche 14 des Lichtleitelements 60 hingegen hat im Wesentlichen eine sechseckige Form, ähnlich wie zu Figur 2 erläutert (jedoch mit im Vergleich kürzeren Leitkanten 25 und längeren Spitzenkanten 26 und 28). Um eine möglichst vollständige Lichteinkopplung zu erzielen, muss die Lichtabstrahlfläche 75 weitgehend mit der Lichteintrittsfläche 14 überlappen. Aufgrund der Formunähnlichkeit von Lichtabstrahlfläche 75 und Lichteintrittsfläche 14 genügt es im Falle des Lichtleitelements 60, die senkrecht zur Austrittsflächenlängsrichtung 22 verlaufenden Kanten der beiden Flächen 14 und 75 aneinander auszurichten (also die Grundkante 24 der Lichteintrittsfläche 14 und eine der senkrecht zur Austrittsflächenlängsrichtung 22 verlaufenden Begrenzungskanten der Lichtabstrahlfläche 75). Die Positionierung ist weniger kritisch hinsichtlich einer Verschiebung senkrecht zur Austrittsflächenlängsrichtung 22, da dann bei geringfügiger Positionierungsungenauigkeit lediglich Ecken der Lichtabstrahlfläche 75 über die Spitzenkanten 26 beziehungsweise 28 der Lichtabstrahlfläche 14 hinausragen, so dass nur ein geringer Anteil der abgestrahlten Lichtmenge verloren geht.

In Figur 5 weist die Lichtabstrahlfläche 75 eine Form auf, welche sich aus der zu Figur 4 erläuterten Form dadurch ergibt, dass in einer Ecke der Lichtabstrahlfläche 75 ein kleiner, im Wesentlichen quadratischer Bereich ausgespart wird. Bei einem LED-Chip kann dies beispielsweise zur Ausbildung eines Bond-Pads zur Kontaktierung der LED erforderlich sein.

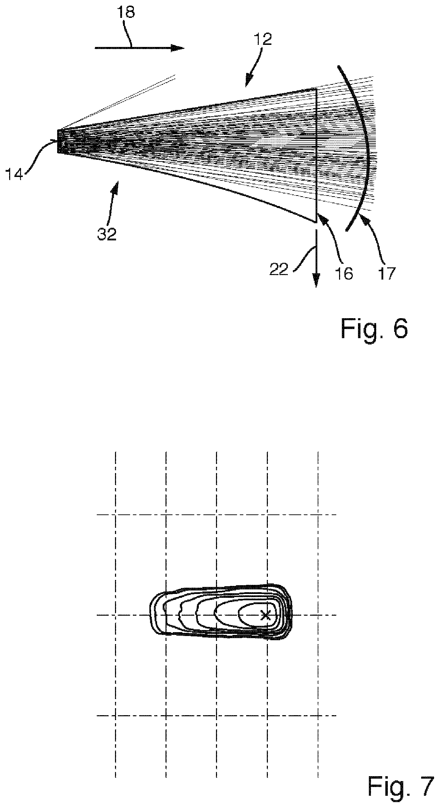

Anhand der Figuren 6 bis 9 werden die Auswirkungen der vorstehend beschriebenen Maßnahmen auf die Intensitätsverteilung des durch die Lichtaustrittsfläche 16 ausgekoppelten Lichts beschrieben. Die Figur 6 skizziert hierzu Strahlenverläufe durch den Lichtleitabschnitt 12 für Licht, das durch die Lichteintrittsfläche 14 eingekoppelt wird und durch die Lichtaustrittsfläche 16 austritt in einem Längsschnitt entlang der Hauptlichtleitrichtung 18.

Totalreflexion an den Seitenflächen des Dachabschnitts 32 führt zu einer Richtungskomponente entgegengesetzt zum Dachabschnitt 32. Dies führt auf der Lichtaustrittsfläche 16 zu einer Lichtkonzentration in der dem Dachabschnitt 32 gegenüberliegenden Richtung.

Betrachtet man die durch die Lichtaustrittsfläche 16 ausgekoppelte Lichtintensität in einem Testschirm, welcher in Hauptlichtleitrichtung 18 beabstandet parallel zu der Lichtaustrittsfläche 16 aufgespannt ist, so ergibt sich das in Figur 7 skizzierte Bild (Darstellung der Lichtintensität über ISO-Intensitätslinien). Ausgehend von einem Intensitätsmaximum im Konzentrationsbereich der Lichtaustrittsfläche 16 nimmt die Lichtintensität in Austrittsflächenlängsrichtung 22 stetig ab. Da der Lichtweg von der Lichteintrittsfläche 14 zur Lichtaustrittsfläche 16 durch den Dachabschnitt 32 nicht gänzlich abgeschattet wird, gelangt ein geringer Anteil von Lichtstrahlen in den Bereich der Lichtaustrittsfläche 16, welcher dem vorstehend beschriebenen Konzentrationsbereich gegenüberliegt. Der Anteil des in den Konzentrationsbereich gegenüber des Dachabschnitts 32 abgelenkten Lichts ist umso größer, je größer der Anteil der den Lichtleitabschnitt 12 dachartig begrenzenden Seitenflächen 34 und 36 im Vergleich zu den parallel zur Austrittsflächenlängsrichtung 22 verlaufenden Seitenflächen (zum Beispiel Leitflächen 42) ist.

Außerdem wird der Anteil des in dem Konzentrationsbereich gelenkten Lichts größer, je weiter sich der Dachabschnitt 32 in Richtung ausgehend von der Lichteintrittsfläche 14 zur Lichtaustrittsfläche 16 erstreckt. Der Anteil des in den Konzentrationsbereich abgelenkten Lichts nimmt zu, je größer das Verhältnis der Länge des Dachabschnitts 32 und der Länge des Auslaufabschnitts 52 entlang der Hauptlichtleitrichtung 18 ist.

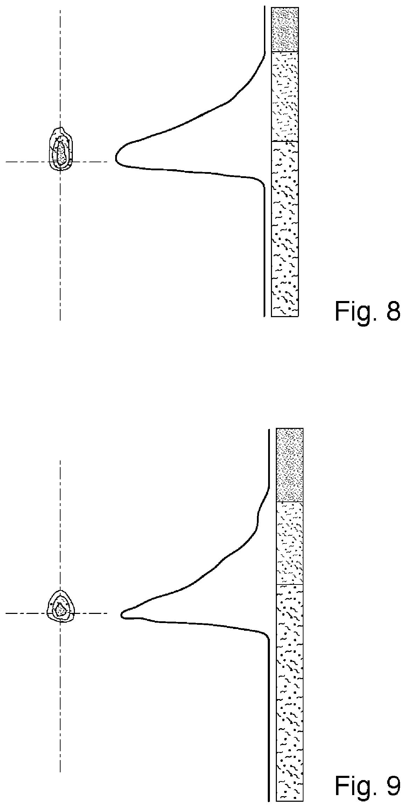

In den Figuren 8 und 9 sind die Intensitätsverläufe für unterschiedliche Ausgestaltungen des Lichtleitelements gegenübergestellt (im linken Bereich jeweils Darstellung des Intensitätsverlaufs auf einem von der Lichtaustrittsfläche 16 beabstandeten Testschirm, im rechten Bereich der Figur vertikaler Schnitt durch die Intensitätsverteilung entlang der Austrittsflächenlängsrichtung 22). Die in den Figuren 8 und 9 dargestellten Intensitätsverteilungen wurden mit erfindungsgemäßen Lichtleitelementen dadurch gewonnen, dass die sich auf der Lichtaustrittsfläche 16 einstellende Intensitätsverteilung mittels einer Sekundäroptik (z.B. Sammellinse) auf den Testschirm projiziert wurden. Daher sind die Darstellungen im Vergleich zu Figur 7 kopfüber und seitenverkehrt.

Ein Intensitätsprofil in der Art von Figur 8 ergibt sich für ein Lichtleitelement, bei dem beispielsweise das Verhältnis von Dachhöhe 62 zur Lichtleithöhe 64 klein ist und/oder das Verhältnis der Längsausdehnung von Dachabschnitten 32 und Auslaufabschnitt 52 entlang der Hauptlichtleitrichtung 18 klein ist und/oder die Seitenflächen 34 und 36 des Lichtleitabschnitts 12 im Verlauf ausgehend von der Lichteintrittsfläche 14 zur Lichtaustrittsfläche 16 stark trichterartig auseinander laufen. Diese Ausgestaltungen führen nämlich dazu, dass ein größerer Anteil von Lichtstrahlen durch den Lichtleitabschnitt 12 läuft, ohne an Seitenflächen des Dachabschnitts 32 totalreflektiert zu werden. Daher fällt die Lichtkonzentration weniger ausgeprägt aus.

Demgegenüber zeigt die Figur 9 ein Intensitätsprofil für ein Lichtleitelement, bei dem die Dachhöhe 62 wesentlich größer als die Lichtleithöhe 64 ist und/oder die Längsausdehnung des Dachabschnitts 32 groß im Vergleich zur Längsausdehnung des Auslaufabschnitts 52 ist und/oder die Seitenflächen 34 und 36 des Lichtleitabschnitts 12 nur geringfügig trichterartig auseinanderlaufen. Dies führt zu einem Intensitätsprofil mit eng begrenztem Intensitätsmaximum und im Wesentlichen exponentiellen Auslauf.

Das Lichtleitelement 60 gemäß Figur 4 führt eher zu einem Intensitätsprofil ähnlich Figur 9, wogegen das Lichtleitelement 70 eher ein Intensitätsprofil in der Art von Figur 8 liefert.

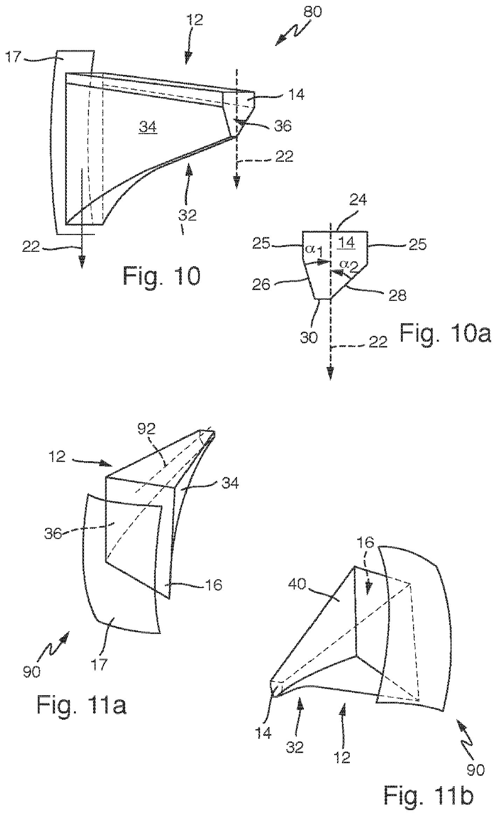

In Figur 10 ist ein Lichtleitelement 80 beschrieben, welches einen verkippt ausgebildeten Dachabschnitt 32 aufweist. Dies wird dadurch erreicht, dass die erste Seitenfläche 34 mit der Austrittsflächenlängsrichtung 22 einen spitzen ersten Anstellwinkel α1 einschließt, und die zweite Seitenfläche 36 mit der Austrittsflächenlängsrichtung 22 einen hiervon abweichenden, spitzen zweiten Anstellwinkel α2 einschließt. Der erste Anstellwinkel α1 ist betragsmäßig kleiner als der zweite Anstellwinkel α2. Zur Verdeutlichung ist in Figur 10a die Form der Lichteintrittsfläche 14 skizziert, wobei für die Begrenzungskanten dieselben Bezugszeichen wie in Figur 2 verwendet werden. Erkennbar ist die Lichteintrittsfläche 14 im Wesentlichen sechseckig ausgebildet. Jedoch schließt die erste Spitzenkante 26 mit der Austrittsflächenlängsrichtung 22 den kleineren ersten Anstellwinkel α1 ein, wogegen die zweite Spitzenkante 28 mit der Austrittsflächenlängsrichtung 22 den größeren zweiten Anstellwinkel α2 einschließt. Abweichend von den vorstehend beschriebenen Lichtleitelementen 10, 60, 70 ist daher der Lichtleitabschnitt 12 des Lichtleitelements 80 nicht spiegelsymmetrisch zu einer durch die Austrittsflächenlängsrichtung 22 verlaufenden Ebene ausgebildet.

In den Figuren 11a und 11b ist ein Lichtleitelement 90 dargestellt, welches sich aus einem Lichtleitelement gemäß Figur 1 dadurch ergibt, dass der Lichtleitabschnitt 12 entlang einer Leitlinie 92 verkrümmt wird. Dies führt dazu, dass die erste Seitenfläche 34 in ihrem Verlauf ausgehend von der Lichteintrittsfläche 14 zur Lichtaustrittsfläche 16 stärker konkav gekrümmt ist, als die zweite Seitenfläche 36. Der Lichtleitabschnitt 12 weitet sich daher in der Art eines asymmetrischen Trichters auf.

Die in den Figuren 10 und 11a und 11b dargestellten Ausgestaltungen der Lichtleitelemente führen dazu, dass das Intensitätsmaximum auf der Lichtaustrittsfläche in Richtung senkrecht zur Austrittsflächenlängsrichtung 22 verschoben wird. Dadurch können gezielt asymmetrische Lichtverteilungen erzeugt oder Verschiebungen des Lichtschwerpunkts ausgeglichen werden. Vorteilhaft kann es sein, wenn auch die Form der Lichtaustrittsfläche 16 durch Verzerrung der reinen Rechteckform modifiziert wird (vergleiche Figur 11). Dadurch ist es möglich, dass die Kante, in welcher die Dachgegenebene 40 mit der Lichtaustrittsfläche 16 zusammenläuft (und zu welcher hin die Lichtkonzentration erfolgt) nicht mehr parallel zu dem sich auf der Lichtaustrittsfläche 16 ausbildenden Intensitätsmaximum verläuft.

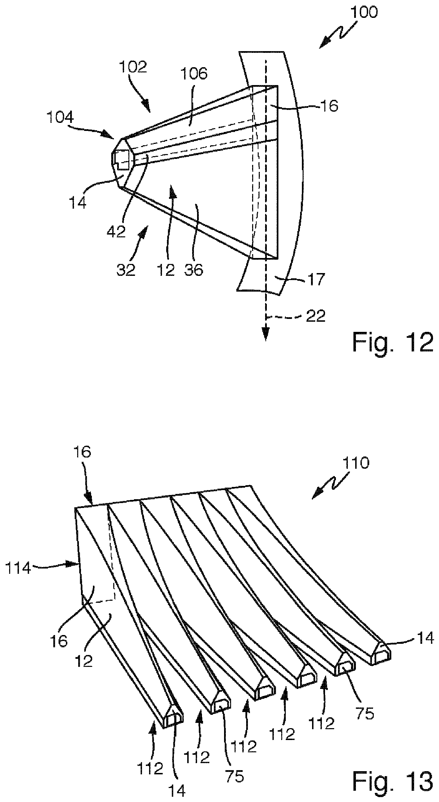

Die Figur 12 zeigt ein Lichtleitelement 100, bei welchem der Lichtleitabschnitt 12 von zwei einander gegenüberliegenden, in Richtung von der Lichteintrittsfläche 14 zur Lichtaustrittsfläche 16 verlaufenden Dachabschnitten 32 und 102 begrenzt ist. Die Dachabschnitte 32 und 102 liegen einander in Bezug auf die Erstreckungsrichtung des Lichtleitabschnitts 12 von der Lichteintrittsfläche 14 zur Lichtaustrittsfläche 16 gegenüber. Der (erste) Dachabschnitt 32 weist dabei eine Ausgestaltung auf, wie sie beispielsweise zu den Figuren 1 und 2 beschrieben ist. Anstelle der Dachgegenebene 40 weist der Lichtleitabschnitt 12 den weiteren Dachabschnitt 102 (Gegendachabschnitt) auf. Im Bereich des weiteren Dachabschnitts 102 hat der Lichtleitabschnitt 12 eine dritte Seitenfläche 104 und eine vierte Seitenfläche 106, welche in Bezug auf die Richtung entgegengesetzt zur Austrittsflächenlängsrichtung 22 aufeinander zu laufen. Die erste Seitenfläche 34 und die zweite Seitenfläche 36 des ersten Dachabschnitts 32 laufen in Richtung des weiteren Dachabschnitts 102 auseinander. Ebenso laufen die Seitenflächen 104 und 106 des weiteren Dachabschnitts 102 in Richtung des ersten Dachabschnitts 32 auseinander. Zwischen der dritten Seitenfläche 104 und der ersten Seitenfläche 34 verläuft eine Lichtleitfläche 42, welche sich parallel zur Austrittsflächenlängsrichtung 22 erstreckt. Ebenso verläuft eine Lichtleitfläche 42 zwischen der vierten Seitenfläche 106 und der zweiten Seitenfläche 36. Die Lichtleitflächen 42 stoßen wiederum über sich entlang des Lichtleitabschnitts 12 erstreckende Dachgrenzkanten mit den jeweils benachbarten dachartigen Seitenflächen 104 beziehungsweise 34 oder 106 beziehungsweise 36 zusammen.

Bei dem Lichtleitelement 100 werden die im Lichtleitabschnitt 12 geleiteten Lichtstrahlen sowohl in Richtung entgegengesetzt zum ersten Dachabschnitt 32, als auch in Richtung entgegengesetzt zum weiteren Dachabschnitt 102 gelenkt. Somit stellt sich auf der Lichtaustrittsfläche 16 ein Intensitätsprofil mit einem Maximum in dem Bereich ein, in welchem die Lichtleitflächen 42 mit der Lichtaustrittsfläche 16 zusammenlaufen. Ausgehend von diesem Maximum läuft das Intensitätsprofil sowohl in der Austrittsflächenlängsrichtung 22, als auch in der entgegengesetzten Richtung stetig aus.

Aus den erfindungsgemäßen Lichtleitelementen kann eine Primäroptik 110 für eine Kfz-Beleuchtungseinrichtung aufgebaut werden, wie dies in Figur 13 dargestellt ist. Dabei sind mehrere Lichtleitelemente 112 matrixartig angeordnet, im vorliegenden Fall in der Art einer Zeilenmatrix. Die Lichtleitelemente 112 können in der Art einer der vorstehend beschriebenen Ausführungsformen ausgebildet sein. Die Lichtleitabschnitte 12 der einzelnen Lichtleitelemente 112 erstrecken sich im dargestellten Beispiel im Wesentlichen parallel zueinander. Die Lichtaustrittsflächen 16 der einzelnen Lichtleitelemente 112 verlaufen unmittelbar aneinander angrenzend, so dass eine Primäroptikaustrittsfläche 114 gebildet wird, welche sämtliche Lichtaustrittsflächen 16 der einzelnen Lichtleitelemente 112 umfassen. Denkbar ist jedoch auch, dass zwischen je zwei aneinander angrenzenden Lichtaustrittsflächen 16 herstellungsbedingt ein Abstand (z.B. im Bereich von 0,1 mm) gebildet ist.

Im dargestellten Beispiel ist die Primäroptikaustrittsfläche 114 im Wesentlichen eben. Denkbar sind jedoch auch Ausgestaltungen mit einer gekrümmten, beispielsweise sattelförmigen Primäroptikaustrittsfläche 114. Die einzelnen Lichtleitabschnitte 12 der Lichtleitelemente 112 stehen dann insbesondere lokal senkrecht auf der Primäroptikaustrittsfläche 114.

Ausgehend von der Primäroptikaustrittsfläche 114 erstrecken sich die Lichtleitabschnitte 12 derart, dass sich die Seitenwände nicht berühren. Eine Berührung von benachbarten Lichtleitabschnitten 12 im Bereich ihrer Seitenwände kann zu einer Beeinträchtigung der Lichtleitung durch interne Totalreflexion führen. Die aus den Lichtleitelementen 112 aufgebaute Primäroptik 110 weist eine entsprechende Anzahl von Lichteintrittsflächen 14 auf, welche ebenso matrixartig (in der Art einer Zeilenmatrix) angeordnet sind. Durch diese Lichteintrittsflächen 14 kann das Licht von entsprechend matrixartig angeordneten Halbleiterlichtquellen in die Primäroptik 110 eingekoppelt werden.

Figur 14 zeigt schematisch der Aufbau eines Lichtmoduls 120, welches eine Primäroptik 110 und eine Sekundäroptik 122 umfasst. Die Primäroptik 110 ist wiederum aus einer Vielzahl von Lichtleitelementen 112 aufgebaut, wobei sich im dargestellten Beispiel die einzelnen Lichtleitelemente 112 in ihrer Ausgestaltung unterscheiden.

Die Sekundäroptik 122 ist derart ausgebildet, dass die sich auf der Primäroptikaustrittsfläche 114 einstellende Lichtverteilung in eine Abstrahllichtverteilung projiziert werden kann (z.B. Sammellinse Zylinderlinse). Zur weiteren Ausgestaltung kann die Sekundäroptik Streustrukturen aufweisen, mittels welchen die Konturen der sich auf den Lichtaustrittsflächen 16 einstellenden Intensitätsverteilungen weich gezeichnet werden können, um eine Abstrahllichtverteilung mit stetigem Intensitätsverlauf zu erzielen. Außerdem kann vorteilhaft sein, wenn die Sekundärtopik 122 ein farbkorrigierendes optisches Element (z.B. Achromat) umfasst.

In Figur 15 ist das Intensitätsprofil dargestellt, welches sich ergibt, wenn die von der Sekundäroptik 122 projizierte Abstrahllichtverteilung auf einem Testschirm beobachtet wird, welcher in Hauptabstrahlrichtung 124 des Lichtmoduls 120 aufgespannt ist. Das Intensitätsprofil weist ein sich horizontal entlang einer Hell-Dunkel-Grenze erstreckendes Intensitätsmaximum auf. In Richtung nach vertikal oben läuft die Intensitätsverteilung ausgehend von dem Intensitätsmaximum stetig aus. Durch geeignete Wahl der matrixartig angeordneten Lichtleitelemente 112 kann bereits auf der Primäroptikaustrittsfläche 114 eine gewünschte Lichtverteilung erzeugt werden, welche über die Sekundäroptik 122 in die Abstrahllichtverteilung abgebildet wird.

Bei der Primäroptik 110 sind mehrere Lichtleitelemente 112 matrixartig nebeneinander angeordnet, wobei sich die Lichtaustrittsflächen 16 der einzelnen Lichtleitelemente 112 in ihrer vertikalen Ausdehnung entlang der jeweiligen Austrittsflächenlängsrichtung 22 unterscheiden. Dabei sind die Lichtleitelemente 112 in der Primäroptik 110 derart angeordnet, dass sich die auf den Lichtaustrittsflächen 16 ausgebildeten Intensitätsmaxima zur Ausbildung eines sich in Figur 15 horizontal erstreckenden Intensitätsmaxima entlang einer Hell-Dunkel-Grenze ergänzen.

Ein wesentlicher Aspekt der vorliegenden Erfindung ist die geometrische Formunähnlichkeit der Lichteintrittsfläche 14 und der Lichtaustrittsfläche 16. Geeignete Kombinationen verschiedener Formen ermöglichen in vorteilhafter Weise die Ausbildung des Dachabschnitts 32, welcher sich unmittelbar an die Lichteintrittsfläche 14 anschließt.

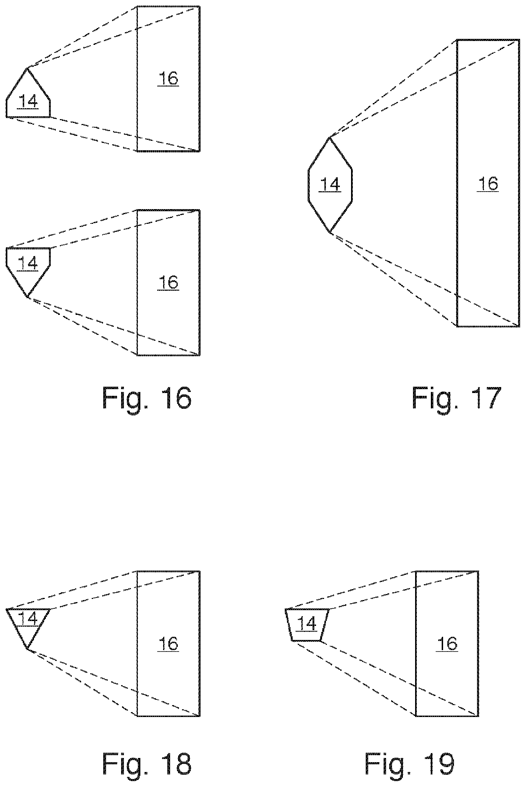

Anhand der Figuren 16 bis 31 werden vorteilhafte Formkombinationen für Lichteintrittsfläche 14 und Lichtaustrittsfläche 16 skizziert. Die Lichtaustrittsfläche 16 hat die Form eines Rechtecks, dessen Höhe entlang der Austrittsflächenlängsrichtung 22 mehr als doppelt so groß ist wie seine Breite senkrecht zur Austrittsflächenlängsrichtung 22. Denkbar sind auch andere längliche oder streifenartige Formen der Lichtaustrittsfläche 16.

In der Darstellung gemäß Figur 16 bis Figur 31 sind zwischen der Lichteintrittsfläche 14 und der Lichtaustrittsfläche 16 gestrichelte Linien angedeutet. Diese haben nicht notwendigerweise die Bedeutung von Kanten, sondern dienen zur Veranschaulichung des Formübergangs von der Lichteintrittsfläche 14 zur Lichtaustrittsfläche 16.

In Figur 16 weist die Lichteintrittsfläche 14 fünfeckige Form auf, wobei nur zwei der Begrenzungskanten einen Spitzenwinkel einschließen. Ausgehend von diesem Spitzenwinkel kann sich der Dachabschnitt erstrecken. In Figur 16 ist die Lichteintrittsfläche 14 in zwei unterschiedlichen Orientierungen dargestellt, welche durch Drehung um 180° auseinander hervorgehen. Es versteht sich, dass bei den erläuterten Lichtleitelementen die Lichteintrittsfläche 14 jeweils auch eine verdrehte, insbesondere um 180° gedrehte, Ausrichtung einnehmen kann.

Figur 17 zeigt eine sechseckige Lichteintrittsfläche 14, welche zwei gegenüberliegende Ecken aufweist, in welchen Kanten unter einem Spitzenwinkel aufeinander zu laufen. Eine solche Lichteintrittsfläche eignet sich für Lichtleitelemente mit zwei einander gegenüberliegenden Dachabschnitten, wie beispielsweise zu Figur 12 erläutert.

Figur 18 zeigt eine dreieckige, Figur 19 eine trapezförmige Lichteintrittsfläche 14. An die schmale Trapezseite kann sich die Dachgradfläche 38 des Dachabschnitts anschließen.

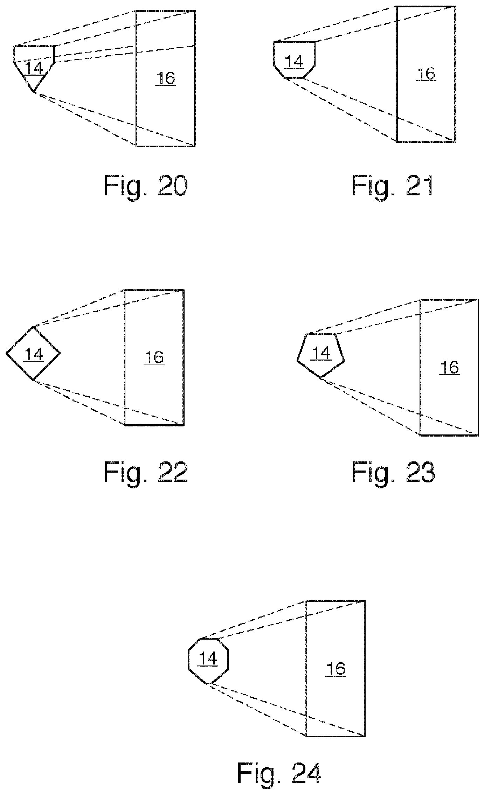

Figur 21 zeigt eine sechseckige Lichteintrittsfläche 14 (vgl. Figur 1). Diese entsteht aus der in Figur 20 dargestellten fünfeckigen Lichteintrittsfläche 14 durch Abschneiden der Spitze, in welcher die Begrenzungskanten unter einem spitzen Winkel zusammen laufen. Figur 22 zeigt eine rhombenförmige Lichteintrittsfläche 14. In Figur 23 ist eine Lichteintrittsfläche 14 dargestellt, welche als gleichseitiges Fünfeck ausgebildet ist. Denkbar ist auch eine achteckig ausgebildete Lichteintrittsfläche 14, vgl. Figur 24.

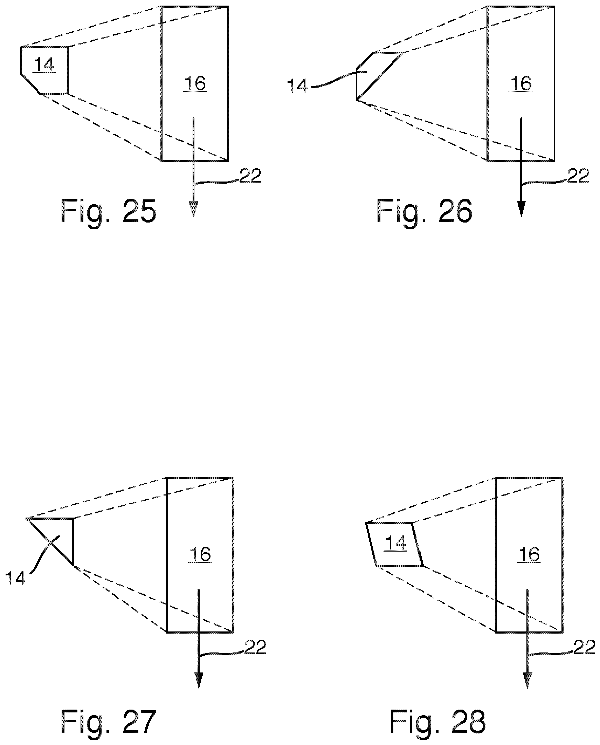

Die Figuren 25 bis 28 zeigen Lichteintrittsflächen 14, welche bezüglich der Austrittsflächenlängsrichtung 22 asymmetrisch ausgebildet sind. In Figur 25 ist die Lichteintrittsfläche fünfeckig, in der Art eines Quadrats mit einer gekappten Ecke. Figur 26 zeigt ein asymmetrisches Trapez als Lichteintrittsfläche 14. Die Lichteintrittsfläche in Figur 27 ist als rechtwinkliges, gleichschenkliges Dreieck ausgebildet, dessen Hypotenuse sich im Winkel von 45° zur Austrittsflächenlängsrichtung 22 erstreckt. Figur 28 zeigt eine als Raute ausgebildete Lichteintrittsfläche 14. Denkbar ist auch ein Parallelogramm.

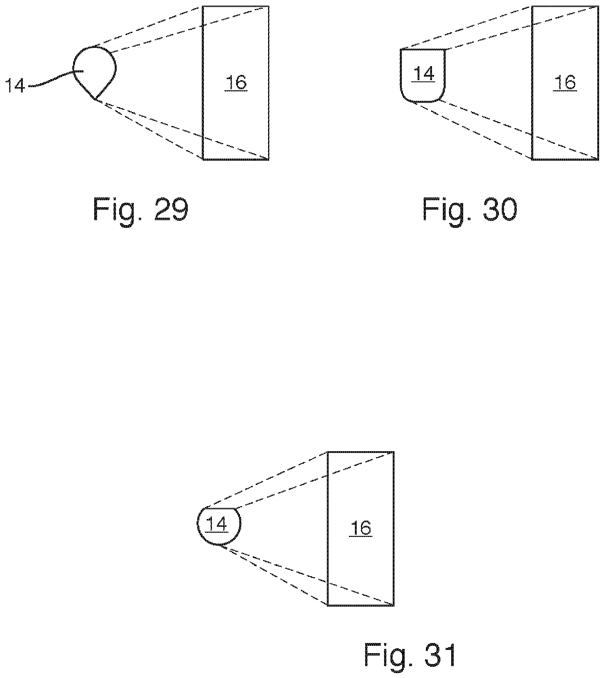

Die Lichteintrittsfläche 14 kann auch als Eineck mit einer Ecke und kreisförmigem Bogen ausgebildet sein, wie in Figur 29 dargestellt. Denkbar ist auch ein tropfenförmiger Querschnitt. Möglich ist auch eine Ausgestaltung als Polygon mit abgerundeten Ecken, beispielsweise als Rechteck mit abgerundeten Ecken, vergleiche Figur 30.

Figur 31 zeigt eine als Kreisabschnitt ausgebildete Lichteintrittsfläche 14.

## Patentansprüche

1. Lichtleitelement (10, 70, 80, 90, 100) für KFZ-Beleuchtungseinrichtungen,
mit einem Lichtleitabschnitt (12), welcher sich zwischen einer Lichteintrittsfläche (14) zum Einkoppeln von Licht und einer Lichtaustrittsfläche (16) zum Auskoppeln von Licht aus dem Lichtleitelement (10, 70, 80, 90, 100) durch die Lichtaustrittsfläche (16) hindurch erstreckt,
wobei der Lichtleitabschnitt (12) wenigstens erste und eine zweite sich in Richtung von der Lichteintrittsfläche (14) zur Lichtaustrittsfläche (16) erstreckende Seitenfläche (34, 36) derart aufweist, dass Licht unter interner Totalreflexion von der Lichteintrittsfläche (14) zur Lichtaustrittsfläche (16) geleitet werden kann,
wobei sich die Lichteintrittsfläche (14) von der Lichtaustrittsfläche (16) in ihrer Form unterscheidet,
**dadurch gekennzeichnet, dass** die Lichtaustrittsfläche (14) sich länglich entlang der Austrittsflächenlängsrichtung (22) erstreckt und eine Längsausdehnung in Austrittsflächenlängsrichtung (22) und eine Querausdehnung senkrecht zur Austrittsflächenlängsrichtung (22) aufweist, wobei die Längsausdehnung größer ist also die Querausdehnung,
und dass der Lichtleitabschnitt (12) unmittelbar ausgehend von der Lichteintrittsfläche (14) einen sich in Richtung zur Lichtaustrittsfläche (16) erstreckenden Dachabschnitt (32) aufweist, in welchem die erste (34) und die zweite (36) Seitenfläche schräg zur Austrittsflächenlängsrichtung (22) geneigt und bezüglich der Austrittsflächenlängsrichtung (22) aufeinander zulaufen und einen dachartigen Rücken des Lichtleitabschnitts (12) bilden, welcher sich von der Lichteintrittsfläche (14) in Richtung zur Lichtaustrittsfläche (16) erstreckt.

2. Lichtleitelement (10, 70, 80, 90, 100) nach Anspruch 1, **dadurch gekennzeichnet, dass** der Lichtleitabschnitt (12) von wenigstens einer weiteren Lichtleitfläche (42) begrenzt ist, welche sich in Richtung von der Lichteintrittsfläche (14) zu der Lichtaustrittsfläche (16) erstreckt und unmittelbar angrenzend entlang einer der Seitenflächen (34, 36) des Dachabschnitts (32) verläuft, wobei die Lichtleitfläche (42) sich parallel zu der Austrittsflächenlängsrichtung (22) erstreckend ausgebildet ist.

3. Lichtleitelement (10, 70, 80, 90, 100) nach einem der vorherigen Ansprüche, **dadurch gekennzeichnet, dass** der Lichtleitabschnitt (12) in der Richtung, entlang welcher die Seitenflächen (34, 36) des Dachabschnitts (32) aufeinander zulaufen, von einer Dachgratfläche (38) begrenzt ist, wobei die Dachgratfläche (38) zwischen der ersten (34) und der zweiten (36) Seitenfläche jeweils unmittelbar an diese angrenzend verläuft
und derart ausgebildet ist, dass der Lichtleitabschnitt (12) in einem Querschnitt parallel zur Lichtaustrittsfläche (16) betrachtet eine senkrecht zur Austrittsflächenlängsrichtung (22) verlaufende Begrenzungskante (30) aufweist.

4. Lichtleitelement (10, 70, 80, 90, 100) nach dem vorherigen Anspruch, **dadurch gekennzeichnet, dass** die Dachgratfläche (38) senkrecht zur Erstreckungsrichtung von der Lichteintrittsfläche (14) zur Lichtaustrittsfläche (16) eine Lateralausdehnung aufweist, welche im Verlauf der Dachgratfläche (38) von der Lichteintrittsfläche (14) zur Lichtaustrittsfläche (16) zunimmt.

5. Lichtleitelement nach Anspruch 3 oder 4, **dadurch gekennzeichnet, dass** sich die Dachgratfläche (38) in Richtung ausgehend von der Lichteintrittsfläche (14) zur Lichtaustrittsfläche (16) in die Richtung krümmt, in welche die erste (34) und die zweite (36) Seitenfläche zusammenlaufen.

6. Lichtleitelement (80) nach einem der vorherigen Ansprüche, **dadurch gekennzeichnet, dass** die erste Seitenfläche (34) des Dachabschnitts (32) einen spitzen ersten Anstellwinkel (α1) und die zweite Seitenfläche einen spitzen zweiten Anstellwinkel (α2) zu der. Austrittsflächenlängsrichtung (22) aufweist, wobei sich der erste Anstellwinkel (α1) betragsmäßig von dem zweiten Anstellwinkel (α2) unterscheidet.

7. Lichtleitelement (10, 70, 80, 90) nach einem der vorherigen Ansprüche, **dadurch gekennzeichnet, dass** der Lichtleitabschnitt (12) in der dem Dachabschnitt (32) entgegengesetzten Richtung von einer Dachgegenebene (40) begrenzt wird, welche sich zwischen der Lichteintrittsfläche (14) und der Lichtaustrittsfläche 816) eben erstreckt.

8. Lichtmodul (120) für KFZ-Scheinwerfer,
mit einer matrixartigen Anordnung von Halbleiterlichtquellen zum Ausstrahlen von Licht,
mit einer Primäroptik (110) mit matrixartig angeordneten Lichtleitelementen (112), welche jeweils eine Lichteintrittsfläche (14) und eine Lichtaustrittsfläche (16) aufweisen,
wobei jeweils eine Lichteintrittsfläche (14) einer Halbleiterlichtquelle zugeordnet ist und die Lichtaustrittsflächen (16) der Lichtleitelemente matrixartig angeordnet sind und eine Primäroptikaustrittsfläche (114) bilden,
und mit einer Sekundäroptik (122), welche dazu eingerichtet ist, die sich im Betrieb des Lichtmoduls auf der Primäroptikaustrittsfläche (114) einstellende Lichtverteilung zur Erzielung einer gewünschten Abstrahllichtverteilung auf ein vor dem Scheinwerfer beziehungsweise dem Lichtmodul liegendes Vorfeld abzubilden,
**dadurch gekennzeichnet, dass**
die Lichtleitelemente (112) nach einem der Ansprüche 1 bis 7 ausgebildet sind.

9. Lichtmodul (120) nach dem vorherigen Anspruch, **dadurch gekennzeichnet, dass** die Halbleiterlichtquelle eine Lichtabstrahlfläche (75) zum Abstrahlen von Licht aufweist, wobei die Lichtabstrahlfläche (75) sich in ihrer Form von der zugeordneten Lichteintrittsfläche (14) unterscheidet.

## Claims

1. Light guiding element (10, 70, 80, 90, 100) for motor vehicle lighting means, comprising a light guiding portion (12) which extends, between a light inlet surface (14) for incoupling light and a light outlet surface (16) for outcoupling light from the light guiding element (10, 70, 80, 90, 100), through the light outlet surface (16), the light guiding portion (12) having at least a first and a second lateral face (34, 36) extending in the direction from the light inlet surface (14) to the light outlet surface (16) such that light, under total internal reflection, can be guided from the light inlet surface (14) to the light outlet surface (16), the light inlet surface (14) differing from the light outlet surface (16) in shape, **characterized in that** the light outlet surface (14) extends longitudinally in the outlet surface longitudinal direction (22) and has a longitudinal extension in the outlet surface longitudinal direction (22) and a transverse extension perpendicularly to the outlet surface longitudinal direction (22), the longitudinal extension being larger than the transverse extension, and **in that** the light guiding portion (12) has, proceeding directly from the light inlet surface (14), a roof portion (32) which extends in the direction of the light outlet surface (16) and in which the first (34) and the second (36) lateral face are inclined obliquely with respect to the outlet surface longitudinal direction (22) and extend towards one another in relation to the outlet surface longitudinal direction (22) and form a roof-like back of the light guiding portion (12), which back extends from the light inlet surface (14) in the direction of the light outlet surface (16).

2. Light guiding element (10, 70, 80, 90, 100) according to claim 1, **characterized in that** the light guiding portion (12) is delimited by at least one further light guiding surface (42) which extends in the direction from the light inlet surface (14) to the light outlet surface (16) and extends along one of the lateral faces (34, 36) of the roof portion (32) so as to directly adjoin said face, the light guiding surface (42) extending in parallel with the outlet surface longitudinal direction (22).

3. Light guiding element (10, 70, 80, 90, 100) according to one of the preceding claims, **characterized in that** the light guiding portion (12) is delimited by a roof ridge surface (38) in the direction in which the lateral faces (34, 36) of the roof portion (32) extend towards one another, the roof ridge surface (38) extending between the first (34) and the second (36) lateral face so as to directly adjoin each one and being designed such that the light guiding portion (12) has, when viewed in a cross section parallel to the light outlet surface (16), a delimiting edge (30) that extends perpendicularly to the outlet surface longitudinal direction (22).

4. Light guiding element (10, 70, 80, 90, 100) according to the preceding claim, **characterized in that** the roof ridge surface (38) has a lateral extension perpendicularly to the direction in which the light inlet surface (14) extends to the light outlet surface (16), which lateral extension increases in the course of the roof ridge surface (38) from the light inlet surface (14) to the light outlet surface (16).

5. Light guiding element according to claim 3 or claim 4, **characterized in that** the roof ridge surface (38), in the direction proceeding from the light inlet surface (14) to the light outlet surface (16), curves in the direction in which the first (34) and the second (36) lateral face converge.

6. Light guiding element (80) according to any of the preceding claims, **characterized in that** the first lateral face (34) of the roof portion (32) has an acute first angle of attack (α1) and the second lateral face has an acute second angle of attack (α2) with respect to the outlet surface longitudinal direction (22), the first angle of attack (α1) differing in size from the second angle of attack (α2).

7. Light guiding element (10, 70, 80, 90) according to any of the preceding claims, **characterized in that** the light guiding portion (12) is delimited in the opposite direction to the roof portion (32) by a plane (40) opposite to the roof, which plane extends between the light inlet surface (14) and the light outlet surface (16) in a planar manner.

8. Light module (120) for a motor vehicle headlamp, comprising a matrix-like arrangement of semiconductor light sources for emitting light, comprising a primary optical unit (110) having light guiding elements (112) which are arranged in a matrix-like manner and each have a light inlet surface (14) and a light outlet surface (16), each light inlet surface (14) being associated with a semiconductor light source and the light outlet surfaces (16) of the light guiding elements being arranged in a matrix-like manner and forming a primary optical unit outlet surface (114), and comprising a secondary optical unit (122) which is designed to form an image of the light distribution that is set on the primary optical unit outlet surface (114) during the operation of the light module in order to achieve a desired distribution of emitted light in a region in front of the headlamp or light module, **characterized in that** the light guiding elements (112) are designed according to any of claims 1 to 7.

9. Light module (120) according to the preceding claim, **characterized in that** the semiconductor light source has a light emission surface (75) for emitting light, the light emission surface (75) differing from the associated light inlet surface (14) in shape.

## Revendications

1. Élément de guidage de lumière (10, 70, 80, 90, 100) pour dispositifs d'éclairage de véhicule automobile,
comportant une section de guidage de lumière (12), qui s'étend entre une surface d'entrée de lumière (14) pour l'injection de lumière et une surface de sortie de lumière (16) pour l'extraction de lumière de l'élément de guidage de lumière (10, 70, 80, 90, 100) à travers la surface de sortie de lumière (16),
dans lequel la section de guidage de lumière (12) présente au moins une première et une deuxième surfaces latérales (34, 36) s'étendant dans la direction de la surface d'entrée de lumière (14) vers la surface de sortie de lumière (16) de sorte que la lumière peut être guidée sous réflexion totale interne de la surface d'entrée de lumière (14) vers la surface de sortie de lumière (16),
dans lequel la surface d'entrée de lumière (14) se distingue de par sa forme de la surface de sortie de lumière (16),
**caractérisé en ce que** la surface de sortie de lumière (14) s'étend allongée le long de la direction longitudinale de surface de sortie (22) et présente une extension longitudinale dans la direction longitudinale de surface de sortie (22) et une extension transversale perpendiculairement à la direction longitudinale de surface de sortie (22),
où l'extension longitudinale est supérieure à l'extension transversale,
et **en ce que** la section de guidage de lumière (12) présente, directement en partant de la surface d'entrée de lumière (14), une section de toit (32) s'étendant en direction de la surface de sortie de lumière (16), dans laquelle la première (34) et la deuxième (36) surfaces latérales sont inclinées en biais par rapport à la direction longitudinale de surface de sortie (22) et convergent l'une vers l'autre par rapport à la direction longitudinale de surface de sortie (22) et forment un dos de type toit de la section de guidage de lumière (12), qui s'étend de la surface d'entrée de lumière (14) en direction de la surface de sortie de lumière (16).

2. Élément de guidage de lumière (10, 70, 80, 90, 100) selon la revendication 1, **caractérisé en ce que** la section de guidage de lumière (12) est délimitée par au moins une autre surface de guidage de lumière (42), qui s'étend dans la direction de la surface d'entrée de lumière (14) vers la surface de sortie de lumière (16) et s'étend directement adjacente le long d'une des surfaces latérales (34, 36) de la section de toit (32), la surface de guidage de lumière (42) étant réalisée en s'étendant parallèlement à la direction longitudinale de surface de sortie (22).

3. Élément de guidage de lumière (10, 70, 80, 90, 100) selon l'une des revendications précédentes, **caractérisé en ce que** la section de guidage de lumière (12) est délimitée dans la direction le long de laquelle les surfaces latérales (34, 36) de la section de toit (32) convergent l'une vers l'autre par une surface d'arête de toit (38), la surface d'arête de toit (38) s'étendant entre la première (34) et la deuxième (36) surfaces latérales respectivement de manière directement adjacente à celle-ci et étant réalisée de telle sorte que la section de guidage de lumière (12) présente, vu en coupe transversale parallèle à la surface de sortie de lumière (16), un bord de délimitation (30) s'étendant perpendiculairement à la direction longitudinale de surface de sortie (22).

4. Élément de guidage de lumière (10, 70, 80, 90, 100) selon la revendication précédente, **caractérisé en ce que** la surface d'arête de toit (38) présente perpendiculairement à la direction d'extension de la surface d'entrée de lumière (14) vers la surface de sortie de lumière (16), une extension latérale qui augmente dans le développement de la surface d'arête de toit (38) de la surface d'entrée de lumière (14) vers la surface de sortie de lumière (16).

5. Élément de guidage de lumière selon la revendication 3 ou 4, **caractérisé en ce que** la surface d'arête de toit (38), dans la direction allant de la surface d'entrée de lumière (14) vers la surface de sortie de lumière (16), se courbe la direction dans laquelle la première (34) et la deuxième (36) surfaces latérales convergent.

6. Élément de guidage de lumière (80) selon l'une des revendications précédentes, **caractérisé en ce que** la première surface latérale (34) de la section de toit (32) présente un premier angle d'incidence aigu (α1) et la deuxième surface latérale présente un deuxième angle d'incidence aigu (α2) par rapport à la direction longitudinale de surface de sortie (22), le premier angle d'incidence (α1) se distinguant par sa valeur du deuxième angle d'incidence (α2).

7. Élément de guidage de lumière (10, 70, 80, 90) selon l'une des revendications précédentes, **caractérisé en ce que** la section de guidage de lumière (12) est délimitée dans la direction opposée à la section de toit (32) par un contreplan de toit (40), qui s'étend à plat entre la surface d'entrée de lumière (14) et la surface de sortie de lumière (16).

8. Module lumineux (120) pour phare de véhicule automobile,
comportant un agencement en matrice de sources lumineuses semi-conductrices pour l'émission de lumière,
comportant une optique primaire (110) avec des éléments de guidage de lumière (112) agencés en matrice, qui présentent respectivement une surface d'entrée de lumière (14) et une surface de sortie de lumière (16),
dans lequel respectivement une surface d'entrée de lumière (14) est coordonnée à une source lumineuse semi-conductrice et les surfaces de sortie de lumière (16) des éléments de guidage de lumière sont agencées en matrice et forment une surface de sortie d'optique primaire (114),
et comportant une optique secondaire (122), qui est aménagée pour représenter la distribution lumineuse se réglant sur la surface de sortie d'optique primaire (114) lors du fonctionnement du module lumineux pour obtenir une distribution de lumière de rayonnement souhaitée sur une zone située devant le phare ou respectivement le module lumineux,
**caractérisé en ce que**
les éléments de guidage de lumière (112) sont réalisés selon l'une des revendications 1 à 7.

9. Module lumineux (120) selon la revendication précédente, **caractérisé en ce que** la source lumineuse semi-conductrice présente une surface de rayonnement de lumière (75) pour le rayonnement de lumière, dans lequel la surface de rayonnement de lumière (75) se distingue de par sa forme de la surface d'entrée de lumière (14) coordonnée.
